# EUROPEAN PATENT APPLICATION

(11) **EP 3 454 579 A1**
(43) Date of publication of application: **13.03.2019**
(21) Application number: 16902663.0
(22) Date of filing: 24.05.2016
(51) Int. Cl.: H04W 4/02

(54) **METHOD FOR ASSOCIATING MISSION CRITICAL USER WITH USER EQUIPMENT THEREOF, AND RELEVANT DEVICE**

(71) Applicant: Huawei Technologies Co., Ltd., Longgang District Shenzhen, Guangdong 518129 (CN)
(72) Inventor: GE, Cuili, Shenzhen, Guangdong 518129 (CN); WU, Yizhuang, Shenzhen, Guangdong 518129 (CN); YANG, Yanmei, Shenzhen, Guangdong 518129 (CN)
(74) Representative: Gill Jennings & Every LLP
(86) International application number: PCT/CN2016/083155
(87) International publication number: WO 2017/201673

(57) **Abstract**

Embodiments of the present invention provide a method for associating a mission critical user with user equipment of the mission critical user, and a related device, so that a mission critical service communications system can obtain location information of a mission critical user. The method includes: receiving, by an LMS, first information sent by an MC client, where the first information includes identity information of a mission critical user and indication information of UE currently used by the mission critical user, and the indication information of the UE includes identification information of the UE, or identification information of the UE and a life cycle timer associated with the identification information of the UE; and establishing and saving, by the LMS based on the first information, an association relationship between the identity information of the mission critical user and the indication information of the UE currently used by the mission critical user. The present invention is applicable to the field of communications technologies.

## Description

### TECHNICAL FIELD

The present invention relates to the field of communications technologies, and in particular, to a method for associating a mission critical (Mission Critical, MC) user with user equipment (User Equipment, UE) of the mission critical user, and a related device.

### BACKGROUND

A location of a user is usually considered as a location of UE used by the user. Therefore, location information of the user can be determined by obtaining location information (such as longitude and latitude coordinate information or local street information) of the UE used by the user.

Further, if the location information of the user is provided to an operator or a service provider, the operator or the service provider may provide some location information-based services based on the location information of the user. A mission critical service, such as emergency rescue in a public safety event (such as a fire, an earthquake, or a storm), is a typical service based on user location information. After a public safety event occurs, a mission critical service communications system that provides a mission critical service may obtain location information of public safety officers on duty through a network side entity in a mobile communications network. A public safety event dispatcher may learn of the location information of the public safety officers on duty through the mission critical service communications system, so as to command, through coordination based on the location information of the public safety officers on duty, the public safety officers on duty to complete an emergency rescue task. The public safety officer on duty is referred to as a mission critical user.

In the existing mobile communications system, the network side entity obtains location information of UE by using identification information of the UE. Therefore, to locate a mission critical user, the mission critical service communications system needs to know identification information of UE used by the mission critical user. However, when the identity information of the mission critical user is isolated from the identification information of the UE used by the mission critical user, for example, when a mission critical service provider is different from an operator of a mobile communications network in which the UE used by the mission critical user is located, the mission critical service communications system cannot obtain the identification information of the UE used by the mission critical user. Consequently, location information of the mission critical user can hardly be obtained from a mobile communications network entity by using a 3rd Generation Partnership Project (3rd Generation Partnership Project, 3GPP) location service mechanism.

### SUMMARY

In view of this, embodiments of the present invention provide a method for associating a mission critical user with user equipment of the mission critical user, and a related device, to resolve at least a prior-art problem that a mission critical service communications system cannot obtain location information of a mission critical user from a mobile communications network entity when identity information of the mission critical user is isolated from identification information of UE used by the mission critical user.

The following technical solutions are used in the embodiments of the present invention to achieve the foregoing objective.

According to a first aspect, a method for associating a mission critical user with user equipment of the mission critical user is provided, including: first obtaining, by an MC client, indication information of UE currently used by a mission critical user, where the indication information of the UE includes identification information of the UE, or identification information of the UE and a life cycle timer associated with the identification information of the UE; and then sending, by the MC client, first information to an LMS, where the first information includes identity information of the mission critical user and the indication information of the UE currently used by the mission critical user, so that the LMS establishes and saves, based on the first information, an association relationship between the identity information of the mission critical user and the indication information of the UE currently used by the mission critical user.

In a first possible implementation of the first aspect, the sending, by the MC client, a first message to an LMS includes:
sending, by the MC client, the first information to the LMS through an MC server.

In the first possible implementation of the first aspect, the method further includes: receiving, by the MC client, second information, where the second information includes information indicating a result of establishing the association relationship.

In this way, the MC client may learn of a processing result of the LMS based on the second information, and then perform further processing based on the processing result of the LMS. For example, after determining that the association relationship fails to be established, the MC client may re-send first information to the LMS, so that the LMS can re-establish, based on the re-sent first information, the association relationship between the identity information of the mission critical user and the indication information of the UE currently used by the mission critical user.

According to a second aspect, a method for associating a mission critical user with user equipment of the mission critical user is provided, including: first receiving, by an LMS, first information sent by an MC client, where the first information includes identity information of a mission critical user and indication information of UE currently used by the mission critical user, and the indication information of the UE includes identification information of the UE, or identification information of the UE and a life cycle timer associated with the identification information of the UE; and then establishing and saving, by the LMS based on the first information, an association relationship between the identity information of the mission critical user and the indication information of the UE currently used by the mission critical user.

In a first possible implementation of the second aspect, the receiving, by an LMS, first information sent by an MC client includes:
receiving, by the LMS, the first information sent by the MC client through an MC server.

In a second possible implementation of the second aspect, the method further includes: sending, by the LMS, second information to the MC client, where the second information includes information indicating a result of establishing the association relationship.

In a third possible implementation of the second aspect, the method further includes: sending, by the LMS, second information to an MC server, where the second information includes information indicating a result of establishing the association relationship.

According to a third aspect, a method for associating a mission critical user with user equipment of the mission critical user is provided, including: first receiving, by an MC server, first information sent by an MC client, where the first information includes identity information of a mission critical user and indication information of UE currently used by the mission critical user, and the indication information of the UE includes identification information of the UE, or identification information of the UE and a life cycle timer associated with the identification information of the UE; and then sending, by the MC server, the first information to an LMS, so that the LMS establishes and saves, based on the first information, an association relationship between the identity information of the mission critical user and the indication information of the UE currently used by the mission critical user.

In a first possible implementation of the third aspect, after the sending, by the MC server, the first information to an LMS, the method further includes: receiving, by the MC server, second information sent by the LMS, where the second information includes information indicating a result of establishing the association relationship; and sending, by the MC server, the second information to the MC client.

In this way, the MC client may learn of a processing result of the LMS based on the second information, and then perform further processing based on the processing result of the LMS. For example, after determining that the association relationship fails to be established, the MC client may re-send first information to the LMS, so that the LMS can re-establish, based on the re-sent first information, the association relationship between the identity information of the mission critical user and the indication information of the UE currently used by the mission critical user.

In a second possible implementation of the third aspect, the second information further includes the association relationship; and after the receiving, by the MC server, second information sent by the LMS, the method further includes: saving, by the MC server, the association relationship.

In this way, if the LMS subsequently requests, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

According to a fourth aspect, a method for associating a mission critical user with user equipment of the mission critical user is provided, including: first obtaining, by an LMS, indication information of UE currently used by a mission critical user, where the indication information of the UE includes identification information of the UE, or identification information of the UE and a life cycle timer associated with the identification information of the UE; and then establishing and saving, by the LMS, an association relationship between identity information of the mission critical user and the indication information of the UE currently used by the mission critical user.

In a first possible implementation of the fourth aspect, the obtaining, by an LMS, indication information of UE currently used by a mission critical user includes: sending, by the LMS, a first request message to an MC client, where the first request message carries the identity information of the mission critical user, and the first request message is used to request the indication information of the UE currently used by the mission critical user; receiving, by the LMS, a first request response message sent by the MC client, where the first request response message carries the indication information of the UE currently used by the mission critical user; and obtaining, by the LMS based on the first request response message, the indication information of the UE currently used by the mission critical user.

In a second possible implementation of the fourth aspect, the obtaining, by an LMS, indication information of UE currently used by a mission critical user includes: sending, by the LMS, a second request message to an MC server, where the second request message is used to request the indication information of the UE currently used by the mission critical user, and the second request message carries the identity information of the mission critical user; receiving, by the LMS, a second request response message sent by the MC server, where the second request response message carries the indication information of the UE currently used by the mission critical user; and obtaining, by the LMS based on the second request response message, the indication information of the UE currently used by the mission critical user.

Based on the second possible implementation of the fourth aspect, in a third possible implementation of the fourth aspect, after the establishing and saving, by the LMS, an association relationship between identity information of the mission critical user and the indication information of the UE currently used by the mission critical user, the method further includes: sending, by the LMS, a notification message to the MC server, where the notification message carries the association relationship.

In this way, if the LMS subsequently requests, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

According to a fifth aspect, a method for associating a mission critical user with user equipment of the mission critical user is provided, including: receiving, by an MC server, a second request message sent by an LMS, and sending a third request message to an MC client, where the second request message and the third request message are used to request indication information of UE currently used by a mission critical user, the indication information of the UE includes identification information of the UE, or identification information of the UE and a life cycle timer associated with the identification information of the UE, and the second request message and the third request message carry identity information of the mission critical user; and receiving, by the MC server, a third request response message sent by the MC client, where the third request response message carries the indication information of the UE currently used by the mission critical user, and sending a second request response message to the LMS, so that the LMS establishes and saves, based on the second request response message, an association relationship between the identity information of the mission critical user and the indication information of the UE currently used by the mission critical user.

In a first possible implementation of the fifth aspect, after the receiving, by the MC server, a third request response message sent by the MC client, the method further includes: receiving, by the MC server, a notification message sent by the LMS, where the notification message carries the association relationship; and obtaining and saving, by the MC server, the association relationship based on the notification message.

In this way, if the LMS subsequently requests, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

According to a sixth aspect, a method for associating a mission critical user with user equipment of the mission critical user is provided, including: receiving, by an MC client, a first request message sent by an LMS, where the first request message is used to request indication information of UE currently used by a mission critical user, the indication information of the UE includes identification information of the UE, or identification information of the UE and a life cycle timer associated with the identification information of the UE, and the first request message carries identity information of the mission critical user; and obtaining, by the MC client, the indication information of the UE based on the first request message, and sending a first request response message to the LMS, so that the LMS establishes and saves an association relationship between the identity information of the mission critical user and the indication information of the UE based on the first request response message, where the first request response message carries the indication information of the UE; or
receiving, by an MC client, a third request message sent by an MC server, where the third request message is used to request indication information of UE currently used by a mission critical user; and obtaining, by the MC client, the indication information of the UE based on the third request message, and sending a third request response message to the MC server, so that the MC server sends a second request response message to an LMS, and the LMS establishes and saves an association relationship between identity information of the mission critical user and the indication information of the UE based on the second request response message, where the second request response message and the third request response message carry the indication information of the UE.

According to a seventh aspect, an MC client is provided, including an obtaining unit and a sending unit. The obtaining unit is configured to obtain indication information of UE currently used by a mission critical user, where the indication information of the UE includes identification information of the UE, or identification information of the UE and a life cycle timer associated with the identification information of the UE. The sending unit is configured to send first information to an LMS, so that the LMS establishes and saves, based on the first information, an association relationship between identity information of the mission critical user and the indication information of the UE currently used by the mission critical user, where the first information includes the identity information of the mission critical user and the indication information of the UE currently used by the mission critical user.

According to an eighth aspect, an MC server is provided, including a receiving unit and a sending unit. The receiving unit is configured to receive first information sent by an MC client, where the first information includes identity information of a mission critical user and indication information of UE currently used by the mission critical user, and the indication information of the UE includes identification information of the UE, or identification information of the UE and a life cycle timer associated with the identification information of the UE. The sending unit is configured to send the first information to an LMS, so that the LMS establishes and saves, based on the first information, an association relationship between the identity information of the mission critical user and the indication information of the UE currently used by the mission critical user.

According to a ninth aspect, an LMS is provided, including a receiving unit, an establishment unit, and a saving unit. The receiving unit is configured to receive first information sent by an MC client, where the first information includes identity information of a mission critical user and indication information of UE currently used by the mission critical user, and the indication information of the UE includes identification information of the UE, or identification information of the UE and a life cycle timer associated with the identification information of the UE. The establishment unit is configured to establish, based on the first information, an association relationship between the identity information of the mission critical user and the indication information of the UE currently used by the mission critical user. The saving unit is configured to save the association relationship.

According to a tenth aspect, an LMS is provided, including an obtaining unit, an establishment unit, and a saving unit. The obtaining unit is configured to obtain indication information of UE currently used by a mission critical user, where the indication information of the UE includes identification information of the UE, or identification information of the UE and a life cycle timer associated with the identification information of the UE. The establishment unit is configured to establish an association relationship between identity information of the mission critical user and the indication information of the UE currently used by the mission critical user. The saving unit is configured to save the association relationship.

According to an eleventh aspect, an MC server is provided, including a receiving unit and a sending unit. The receiving unit is configured to receive a second request message sent by an LMS, where the second request message is used to request indication information of UE currently used by a mission critical user, the indication information of the UE includes identification information of the UE, or identification information of the UE and a life cycle timer associated with the identification information of the UE, and the second request message carries identity information of the mission critical user. The sending unit is configured to send a third request message to an MC client, where the third request message is used to request the indication information of the UE currently used by the mission critical user, and the third request message carries the identity information of the mission critical user. The receiving unit is further configured to receive a third request response message sent by the MC client, where the third request response message carries the indication information of the UE currently used by the mission critical user. The sending unit is further configured to send a second request response message to the LMS, so that the LMS establishes and saves, based on the second request response message, an association relationship between the identity information of the mission critical user and the indication information of the UE currently used by the mission critical user.

According to a twelfth aspect, an MC client is provided, including a receiving unit, an obtaining unit, and a sending unit, where
the receiving unit is configured to receive a first request message sent by an LMS, where the first request message is used to request indication information of UE currently used by a mission critical user, the indication information of the UE includes identification information of the UE, or identification information of the UE and a life cycle timer associated with the identification information of the UE, and the first request message carries identity information of the mission critical user; the obtaining unit is configured to obtain the indication information of the UE based on the first request message; and the sending unit is configured to send a first request response message to the LMS, so that the LMS establishes and saves an association relationship between the identity information of the mission critical user and the indication information of the UE based on the first request response message, where the first request response message carries the indication information of the UE; or the receiving unit is configured to receive a third request message sent by an MC server, where the third request message is used to request indication information of UE currently used by a mission critical user; the obtaining unit is configured to obtain the indication information of the UE based on the third request message; and the sending unit is configured to send a third request response message to the MC server, so that the MC server sends a second request response message to an LMS, and the LMS establishes and saves an association relationship between identity information of the mission critical user and the indication information of the UE based on the second request response message, where the second request response message and the third request response message carry the indication information of the UE.

According to a thirteenth aspect, an MC client is provided, and the MC client includes a processor, a memory, a bus, and a communications interface, where
the memory is configured to store a computer executable instruction; the processor and the memory are connected by using the bus; and when the MC client runs, the processor executes the computer executable instruction stored in the memory, so that the MC client performs the method for associating a mission critical user with user equipment of the mission critical user according to the first aspect or the sixth aspect.

According to a fourteenth aspect, an LMS is provided, and the LMS includes a processor, a memory, a bus, and a communications interface, where
the memory is configured to store a computer executable instruction; the processor and the memory are connected by using the bus; and when the LMS runs, the processor executes the computer executable instruction stored in the memory, so that the LMS performs the method for associating a mission critical user with user equipment of the mission critical user according to the second aspect or the fourth aspect.

According to a fifteenth aspect, an MC server is provided, and the MC server includes a processor, a memory, a bus, and a communications interface, where
the memory is configured to store a computer executable instruction; the processor and the memory are connected by using the bus; and when the MC server runs, the processor executes the computer executable instruction stored in the memory, so that the MC server performs the method for associating a mission critical user with user equipment of the mission critical user according to the third aspect or the fifth aspect.

According to a sixteenth aspect, a mission critical service communications system is provided, including an MC client and an LMS. The MC client obtains indication information of user equipment UE currently used by a mission critical user, and sends first information to the LMS, where the first information includes identity information of the mission critical user and the indication information of the UE currently used by the mission critical user, and the indication information of the UE includes identification information of the UE, or identification information of the UE and a life cycle timer associated with the identification information. The LMS receives the first information sent by the MC client, and establishes and saves, based on the first information, an association relationship between the identity information of the mission critical user and the indication information of the UE currently used by the mission critical user.

In a first possible implementation of the sixteenth aspect, the system further includes an MC server;
that the MC client sends a first message to the LMS may specifically include: the MC client sends the first information to the LMS through the MC server; and
that the LMS receives the first information sent by the MC client may specifically include: the LMS receives the first information sent by the MC client through the MC server.

According to a seventeenth aspect, a mission critical service communications system is provided, including an MC client and an LMS. The LMS sends a first request message to the MC client, where the first request message carries identity information of a mission critical user, the first request message is used to request indication information of user equipment UE currently used by the mission critical user, and the indication information of the UE includes identification information of the UE, or identification information of the UE and a life cycle timer associated with the identification information. The MC client receives the first request message sent by the LMS, and obtains the indication information of the UE based on the first request message. The MC client sends a first request response message to the LMS, where the first request response message carries the indication information of the UE currently used by the mission critical user. The LMS receives the first request response message sent by the MC client, and obtains, based on the first request response message, the indication information of the UE currently used by the mission critical user. The LMS establishes and saves an association relationship between the identity information of the mission critical user and the indication information of the UE.

According to an eighteenth aspect, a mission critical service communications system is provided, including an MC client, an MC server, and an LMS. The LMS sends a second request message to the MC server, where the second request message is used to request indication information of user equipment UE currently used by a mission critical user, the second request message carries identity information of the mission critical user, and the indication information of the UE includes identification information of the UE, or identification information of the UE and a life cycle timer associated with the identification information. The MC server receives the second request message sent by the LMS, and sends a third request message to the MC client, where the third request message is used to request the indication information of the UE currently used by the mission critical user, and the third request message carries the identity information of the mission critical user. The MC client receives the third request message sent by the MC server, and obtains the indication information of the UE based on the third request message. The MC client sends a third request response message to the MC server, where the third request response message carries the indication information of the UE currently used by the mission critical user. The MC server receives the third request response message sent by the MC client, and sends a second request response message to the LMS, where the second request response message carries the indication information of the UE currently used by the mission critical user. The LMS receives the second request response message sent by the MC server, obtains, based on the second request response message, the indication information of the UE currently used by the mission critical user, and establishes and saves an association relationship between the identity information of the mission critical user and the indication information of the UE.

In any one of the first aspect to the eighteenth aspect, the identification information of the UE includes an IMSI of the UE, or an MSISDN of the UE, or an IP address of the UE, or pseudo identification information of the UE.

According to the method for associating a mission critical user with user equipment of the mission critical user, and the related device provided in the embodiments of the present invention, the LMS may establish the association relationship between the identity of the mission critical user and the indication information of the user equipment of the mission critical user based on the first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an architectural diagram of a mission critical service communications system according to an embodiment of the present invention;
FIG. 2 is a schematic interaction diagram 1 of a method for associating a mission critical user with user equipment of the mission critical user according to Embodiment 1 of the present invention;
FIG. 3 is a schematic interaction diagram 2 of a method for associating a mission critical user with user equipment of the mission critical user according to Embodiment 1 of the present invention;
FIG. 4 is a schematic interaction diagram 1 of a method for associating a mission critical user with user equipment of the mission critical user according to Embodiment 2 of the present invention;
FIG. 5A and FIG. 5B are a schematic interaction diagram 2 of a method for associating a mission critical user with user equipment of the mission critical user according to Embodiment 2 of the present invention;
FIG. 6 is a schematic interaction diagram 1 of a method for associating a mission critical user with user equipment of the mission critical user according to Embodiment 3 of the present invention;
FIG. 7 is a schematic interaction diagram 2 of a method for associating a mission critical user with user equipment of the mission critical user according to Embodiment 3 of the present invention;
FIG. 8 is a schematic interaction diagram 1 of a method for associating a mission critical user with user equipment of the mission critical user according to Embodiment 4 of the present invention;
FIG. 9A and FIG. 9B are a schematic interaction diagram 2 of a method for associating a mission critical user with user equipment of the mission critical user according to Embodiment 4 of the present invention;
FIG. 10 is a schematic structural diagram 1 of an MC client according to Embodiment 5 of the present invention;
FIG. 11 is a schematic structural diagram 2 of an MC client according to Embodiment 5 of the present invention;
FIG. 12 is a schematic structural diagram 1 of an MC server according to Embodiment 6 of the present invention;
FIG. 13 is a schematic structural diagram 2 of an MC server according to Embodiment 6 of the present invention;
FIG. 14 is a schematic structural diagram 3 of an MC server according to Embodiment 6 of the present invention;
FIG. 15 is a schematic structural diagram 1 of an LMS according to Embodiment 7 of the present invention;
FIG. 16 is a schematic structural diagram 2 of an LMS according to Embodiment 7 of the present invention;
FIG. 17 is a schematic structural diagram 1 of an LMS according to Embodiment 8 of the present invention;
FIG. 18 is a schematic structural diagram 2 of an LMS according to Embodiment 8 of the present invention;
FIG. 19 is a schematic structural diagram 3 of an LMS according to Embodiment 8 of the present invention;
FIG. 20 is a schematic structural diagram 1 of an MC server according to Embodiment 9 of the present invention;
FIG. 21 is a schematic structural diagram 2 of an MC server according to Embodiment 9 of the present invention;
FIG. 22 is a schematic structural diagram 3 of an MC server according to Embodiment 9 of the present invention;
FIG. 23 is a schematic structural diagram of an MC client according to Embodiment 10 of the present invention;
FIG. 24 is a schematic structural diagram of an apparatus for associating a mission critical user with user equipment of the mission critical user according to Embodiment 11 of the present invention;
FIG. 25 is a schematic composition diagram 1 of a mission critical service communications system according to Embodiment 12 of the present invention;
FIG. 26 is a schematic composition diagram 2 of a mission critical service communications system according to Embodiment 12 of the present invention;
FIG. 27 is a schematic composition diagram of a mission critical service communications system according to Embodiment 13 of the present invention; and
FIG. 28 is a schematic composition diagram of a mission critical service communications system according to Embodiment 14 of the present invention.

### DESCRIPTION OF EMBODIMENTS

The following describes the technical solutions in the embodiments of the present invention with reference to the accompanying drawings in the embodiments of the present invention. Apparently, the described embodiments are merely some but not all of the embodiments of the present invention. In the following descriptions, for the purpose of explanation instead of limitation, particular details are described for clear understanding. In some embodiments, detailed descriptions of a well-known apparatus, circuit, and method are omitted, so as to avoid blurred descriptions caused by unnecessary details.

In addition, to clearly describe the technical solutions in the embodiments of the present invention, in the embodiments of the present invention, the terms "first", "second", and the like are used to distinguish between same items or similar items whose functions and purposes are basically the same, and a person skilled in the art may understand that the terms "first" "second", and the like do not limit a quantity and an execution sequence.

The present invention is mainly applied to a mission critical service communications system that is based on a mobile communications system. The mobile communications system may be specifically a Long Term Evolution (Long Term Evolution, LTE) system, an LTE-Advanced (LTE-Advanced, LTE-A) system, a further evolved communications system of another future version, or another mobile communications system. This is not specifically limited in the embodiments of the present invention.

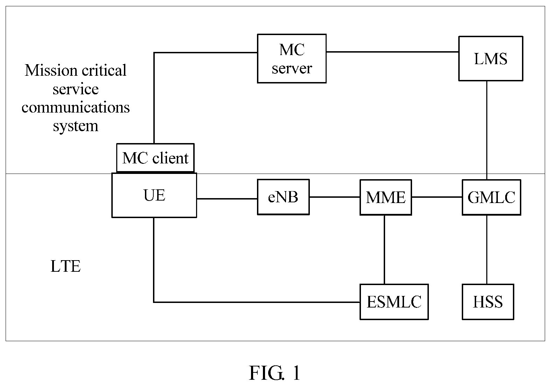

FIG. 1 is an architectural diagram of a mission critical service communications system based on an LTE system according to an embodiment of the present invention. As shown in FIG. 1, the mission critical service communications system mainly includes an MC client, an MC server, and a location management server (Location Management Server, LMS). The MC client is a related application provided by a mission critical service provider, and may be deployed in UE used by a mission critical user. The mission critical user may send a request to the MC server through the MC client, to obtain a mission critical service. The LMS is responsible for obtaining and managing location information of the mission critical user. The LMS may be independently deployed as an independent functional entity, or may be deployed in a common server core (Common Server Core, CSC) (not shown in the figure) at a mission critical application layer. The MC server is responsible for providing a mission critical service such as mission critical push-to-talk (Mission Critical Push-To-Talk, MCPTT), mission critical video (Mission Critical Video, MCVideo), or mission critical data (Mission Critical Data, MCData) to the mission critical user.

The location information of the mission critical user may be used for the mission critical service provided by the MC server to the mission critical user. Specifically, after receiving the request from the MC client, the MC server sends a request message including identity information of the mission critical user to the LMS, to obtain the location information of the mission critical user. After receiving the identity information of the mission critical user, the LMS obtains, from a network entity by using an existing 3GPP location service mechanism, location information of the UE used by the mission critical user (the location information is the location information of the mission critical user), and sends the location information of the mission critical user to the MC server. The LMS may specifically obtain the location information of the target UE from a gateway mobile location center (Gateway Mobile Location Center, GMLC), the Secure User Plane Location Location Platform (SUPL Location Platform, SPL) (not shown in the figure) or the Service Capability Exposure Function (Service Capability Exposure Function, SCEF) (not shown in the figure), or another entity in the LTE system.

Based on the mission critical service communications system shown in FIG. 1, Embodiment 1 to Embodiment 4 of the present invention each provide a method for associating a mission critical user with user equipment of the mission critical user, and Embodiment 5 to Embodiment 14 provide a related device and a system for performing the method embodiments.

### Embodiment 1

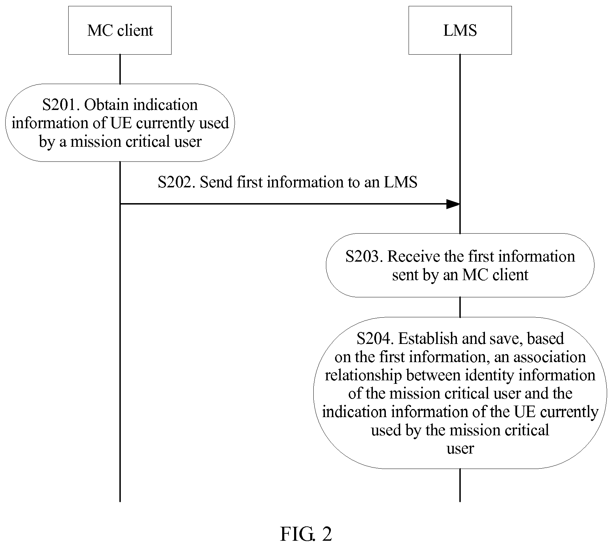

This embodiment of the present invention provides a method for associating a mission critical user with user equipment of the mission critical user. An MC client directly reports identity information of a mission critical user and indication information of UE currently used by the mission critical user to an LMS, so that the LMS establishes an association relationship between the identity information of the mission critical user and the indication information of the UE currently used by the mission critical user. Specifically, as shown in FIG. 2, the method includes steps S201 to S204.
S201. The MC client obtains indication information of UE currently used by a mission critical user.

The UE currently used by the mission critical user is UE on which the MC client is located, and the mission critical user is a mission critical user who exclusively occupies the UE or a mission critical user who is currently in an active state among a plurality of mission critical users sharing the UE.

The indication information of the UE includes identification information of the UE, or identification information of the UE and a life cycle timer associated with the identification information of the UE. The life cycle timer associated with the identification information of the UE is used to indicate effective duration of the identification information of the UE. The identification information may be specifically an international mobile subscriber identity (International Mobile Subscriber Identification Number, IMSI) or a mobile station integrated services digital network number (Mobile Station Integrated Services Digital Network Number, MSISDN) or an Internet Protocol (Internet Protocol, IP) address of the UE, or may be pseudo identification information of the UE, or may be other information that can be used to identify the UE. This is not specifically limited in this embodiment of the present invention.

Specifically, the indication information of the UE may be obtained by the UE from a network side or generated by the UE, and then is obtained by the MC client from the UE.

If the identification information of the UE is the IP address of the UE, in an optional implementation, the UE obtains the identification information of the UE from a PDN gateway (PDN GateWay, PGW) on the network side. If the identification information of the UE is the IMSI/MSISDN of the UE, in an optional implementation, the UE may obtain the identification information from a universal subscriber identity module (Universal Subscriber Identity Module, USIM). If the identification information of the UE is pseudo identification information, in an optional implementation, a GMLC or a pseudonym mediation device (Pseudonym Mediation Device, PMD) on the network side encrypts the IMSI/MSISDN/IP address of the UE by using an encryption mechanism to generate pseudo identification information, and then the UE obtains the pseudo identification information from the pseudonym mediation device (Pseudonym Mediation Device, PMD) or the GMLC (when the PMD and the GMLC are deployed together) and uses the pseudo identification information as the identification information of the UE; in another optional implementation, the UE obtains the IMSI/MSISDN/IP address, and then encrypts the IMSI/MSISDN/IP address by using the same encryption mechanism used by the network side entity PMD or GMLC (when the PMD and the GMLC are deployed together) to generate pseudo identification information as the identification information of the UE. It should be noted that if a public-and-private key encryption system is used, in a possible implementation, the UE uses a public key on the network side for encryption, and the network side entity (the GMLC or the PMD) uses a private key on the network side for decryption.

In addition, if the indication information of the UE includes the life cycle timer associated with the identification information of the UE, the life cycle timer associated with the identification information of the UE is obtained or generated together with the identification information of the UE.
S202. The MC client sends first information to the LMS.

The first information includes identity information of the mission critical user and the indication information of the UE currently used by the mission critical user.
S203. The LMS receives the first information sent by the MC client.
S204. The LMS establishes and saves, based on the first information, an association relationship between identity information of the mission critical user and the indication information of the UE currently used by the mission critical user.

It may be understood that if the indication information includes only the identification information of the UE, the LMS establishes an association relationship between the identity information of the mission critical user and the identification information of the UE currently used by the mission critical user; or if the indication information includes both the identification information of the UE and the life cycle timer associated with the identification information of the UE, the LMS establishes an association relationship among the identity information of the mission critical user, the identification information of the UE currently used by the mission critical user, and the life cycle timer associated with the identification information of the UE. In addition, for ease of description, "the association relationship between the identity information of the mission critical user and the indication information of the UE currently used by the mission critical user" is collectively referred to as an "association relationship" subsequently.

According to the foregoing solution provided in this embodiment of the present invention, the MC client obtains the indication information of the UE currently used by the mission critical user, and directly reports the first information to the LMS, so that the LMS establishes the association relationship between the identity of the mission critical user and the indication information of the user equipment of the mission critical user based on the first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

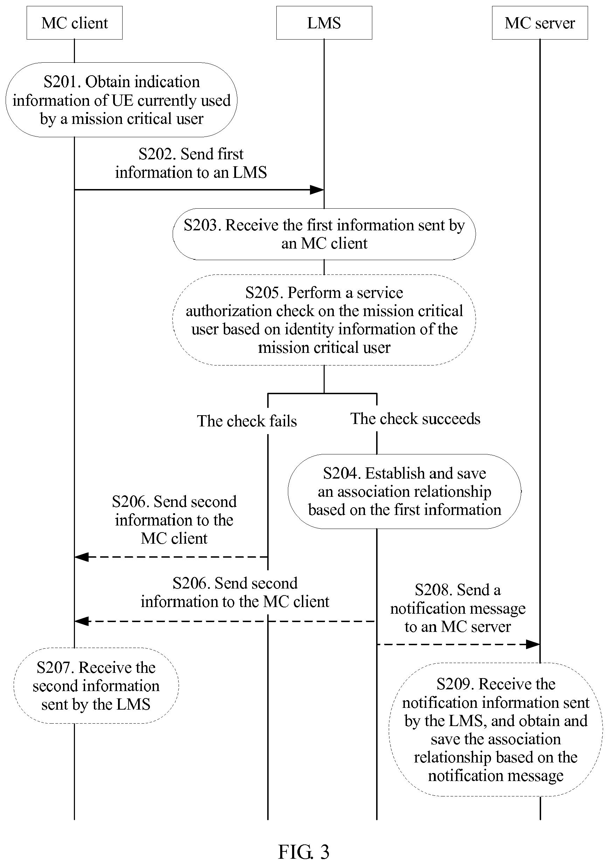

Optionally, as shown in FIG. 3, before step S204, the method for associating a mission critical user with user equipment of the mission critical user provided in this embodiment of the present invention may further include step S205.
S205. The LMS performs a service authorization check on the mission critical user based on the identity information of the mission critical user.

Specific content of the service authorization check may be checking whether a mission critical service (such as MCPTT, MCVideo, or MCData) to which the mission critical user subscribes supports a location management service.

As shown in FIG. 3, if the service authorization check performed by the LMS on the mission critical user succeeds, the LMS performs step S204. On the contrary, if the service authorization check performed by the LMS on the mission critical user fails, the LMS no longer performs step S204, but notifies the MC client that the association relationship fails to be established (in other words, performs step S206). In other words, the association relationship is established after it is ensured that an identity of the mission critical user is valid. In this way, validity of the established association relationship can be ensured, and establishment of an invalid association relationship is avoided.

Optionally, still referring to FIG. 3, the method for associating a mission critical user with user equipment of the mission critical user provided in this embodiment of the present invention may further include steps S206 and S207.
S206. The LMS sends second information to the MC client.

The second information includes information indicating a result of establishing the association relationship.

Optionally, if the association relationship fails to be established, the LMS may indicate, to the MC client, a reason why the association relationship fails to be established while indicating an association relationship establishment failure.
S207. The MC client receives the second information.

According to the foregoing solution, the MC client may learn of a processing result of the LMS based on the second information, and then perform further processing based on the processing result of the LMS. For example, after determining that the association relationship fails to be established, the MC client may re-send first information to the LMS, so that the LMS can re-establish the association relationship based on the re-sent first information.

Optionally, still referring to FIG. 3, after step S204, the method may further include steps S208 and S209.
S208. The LMS sends a notification message to an MC server.

The notification message carries the association relationship established by the LMS.
S209. The MC server receives the notification information sent by the LMS, and obtains and saves the association relationship based on the notification message.

To be specific, after successfully establishing the association relationship, the LMS sends, to the MC server, the notification message that carries the established association relationship, so that after receiving the notification message, the MC server obtains and saves the association relationship based on the notification message. In this way, if the LMS subsequently requests, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

It should be noted that in the solution shown in FIG. 3, there is no strict execution sequence between step S208 and step S206. In other words, after the service authorization check performed by the LMS on the mission critical user succeeds, the LMS may perform step S206 before step S208 as shown in FIG. 3, or may perform step S208 before step S206. This is not specifically limited in this embodiment of the present invention.

### Embodiment 2

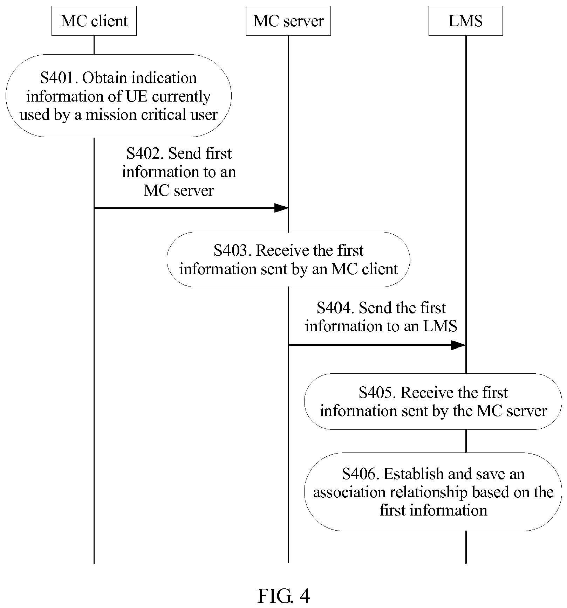

This embodiment of the present invention provides another method for associating identity information of a mission critical user with user equipment of the mission critical user. Embodiment 2 differs from Embodiment 1 in that an MC client reports first information to an LMS through an MC server, so that the LMS establishes, based on the first information reported by the MC client, an association relationship between identity information of a mission critical user and indication information of UE currently used by the mission critical user. Specifically, as shown in FIG. 4, the method may include steps S401 to S406.
S401. The MC client obtains indication information of UE currently used by a mission critical user.

The indication information of the UE includes identification information of the UE, or identification information of the UE and a life cycle timer associated with the identification information of the UE. For a specific method for obtaining, by the MC client, the indication information of the UE currently used by the mission critical user, refer to the related description in Embodiment 1. Details are not described herein again in this embodiment of the present invention.
S402. The MC client sends first information to the MC server.

In an optional implementation of this embodiment of the present invention, the first information may be carried in any message used during communication between the MC client and the MC server. For example, the first information may be carried in a registration request message that is sent to the MC server when the MC client performs registration, and the first information is sent to the MC server by using the message. This is not specifically limited in this embodiment of the present invention.
S403. The MC server receives the first information sent by the MC client.
S404. The MC server sends the first information to the LMS.

In an optional implementation, after receiving a message that carries the first information and that is sent by the MC client, the MC server may directly forward the message to the LMS, to send the first information to the LMS by using the message. Alternatively, after receiving a message that carries the first information and that is sent by the MC client, the MC server encapsulates the message into another message to be sent by the MC server to the LMS, and sends the encapsulated message to the LMS, to send the first information to the LMS.

In another optional implementation, after receiving a message that carries the first information and that is sent by the MC client, the MC server may parse the message to obtain the first information, then add the first information to any message used to communicate with the LMS, and send the first information to the LMS by using the message.
S405. The LMS receives the first information sent by the MC server.
S406. The LMS establishes and saves an association relationship based on the first information.

A person skilled in the art may understand that the foregoing description is merely a specific implementation provided in this embodiment of the present invention, and does not constitute a limitation to the present invention.

According to the foregoing solution provided in this embodiment of the present invention, the MC client obtains the indication information of the UE currently used by the mission critical user, and reports the first information to the LMS through the MC server, so that the LMS establishes the association relationship between the identity of the mission critical user and the indication information of the user equipment of the mission critical user based on the first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

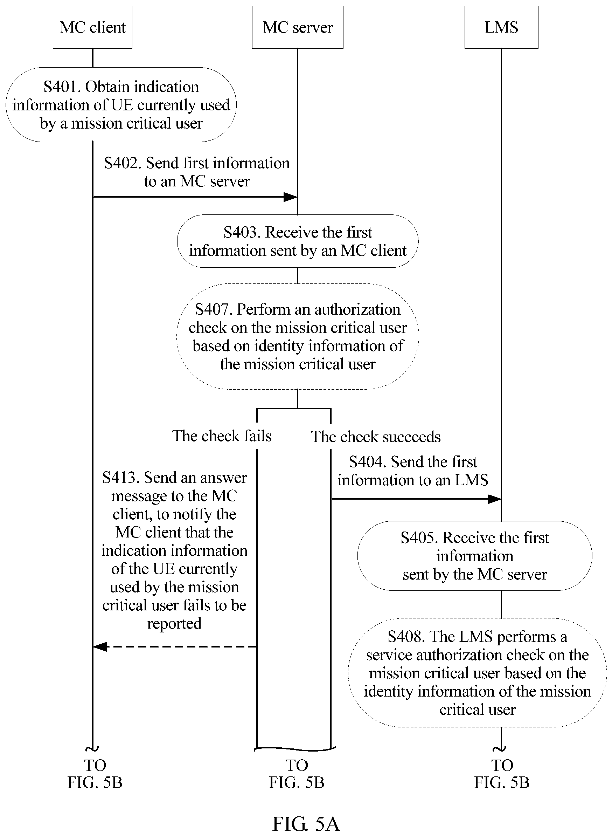

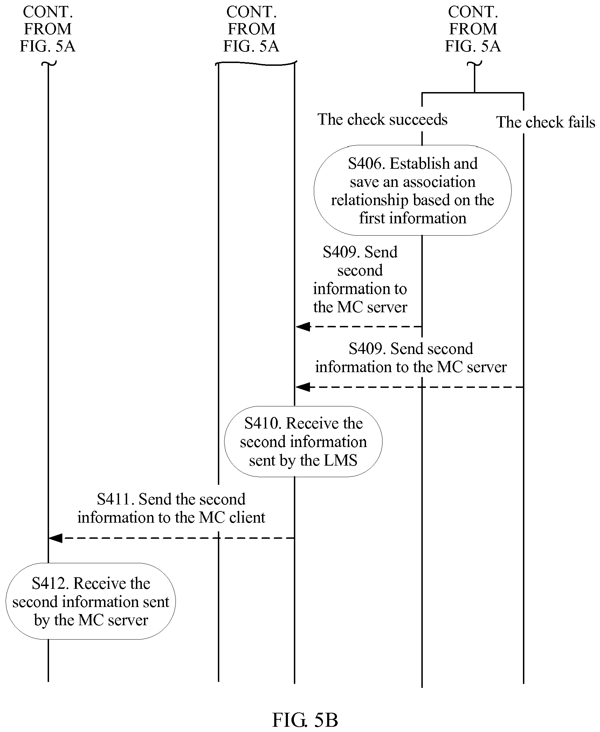

Optionally, as shown in FIG. 5A and FIG. 5B, before step S404, the method may further include step S407.
S407. The MC server performs an authorization check on the mission critical user based on identity information of the mission critical user.

Specific content of the authorization check performed by the MC server on the mission critical user may be determining, based on subscription information of the mission critical user, whether the user can use a location management service.

As shown in FIG. 5A and FIG. 5B, if the authorization check performed by the MC server on the mission critical user succeeds, the MC server sends the first information to the LMS; or if the authorization check performed by the mission critical server on the mission critical user fails, the mission critical server stops reporting the indication information of the UE to the LMS, and performs step S413 shown below.
S413. The MC server sends an answer message to the MC client, to notify the MC client that the indication information of the UE currently used by the mission critical user fails to be reported.

Optionally, still referring to FIG. 5A and FIG. 5B, before step S406, the method may further include step S408.
S408. The LMS performs a service authorization check on the mission critical user based on the identity information of the mission critical user.

For specific content of the service authorization check, refer to the related description in Embodiment 1. Details are not described herein again.

As shown in FIG. 5A and FIG. 5B, if the service authorization check performed by the LMS on the mission critical user succeeds, the LMS performs step S406. On the contrary, if the service authorization check performed by the LMS on the mission critical user fails, the LMS no longer performs step S406. In other words, the association relationship is established after it is ensured that an identity of the mission critical user is valid. In this way, validity of the established association relationship can be ensured, and establishment of an invalid association relationship is avoided.

Optionally, still referring to FIG. 5A and FIG. 5B, the method for associating a mission critical user with user equipment of the mission critical user provided in this embodiment of the present invention may further include steps S409 to S412.
S409. The LMS sends second information to the MC server.

The second information includes information indicating a result of establishing the association relationship. In an optional implementation, the LMS may add the second information to a related message used to communicate with the MC server, and send the second information to the MC server by using the message. This is not specifically limited in this embodiment of the present invention.

Optionally, if the association relationship fails to be established, the LMS may indicate, to the MC server, a reason why the association relationship fails to be established while indicating an association relationship establishment failure. In other words, in addition to the information indicating the result of establishing the association relationship, the second information may include information indicating the reason why the association relationship fails to be established.

Optionally, if the association relationship is successfully established, the LMS may provide the established association relationship to the MC server while indicating an association relationship establishment success. In other words, in addition to the information indicating the result of establishing the association relationship, the second information may include the association relationship established by the LMS. In this case, after receiving the second information, the MC server may save the association relationship established by the LMS.
S410. The MC server receives the second information sent by the LMS.
S411. The MC server sends the second information to the MC client.

Similar to the foregoing method for sending the first information, in an optional implementation, after receiving a message that carries the second information and that is sent by the LMS, the MC server may directly forward the message to the MC client, to send the second information to the MC client by using the message. Alternatively, after receiving a message that carries the second information and that is sent by the MC client, the MC server encapsulates the message into another message to be sent by the MC server to the MC client, and sends the encapsulated message to the MC client, to send the second information to the MC client.

In another optional implementation, after receiving a message that carries the second information and that is sent by the LMS, the MC server may parse the message to obtain the second information, then add the second information to any message used to communicate with the MC client, and send the second information to the MC client by using the message. This is not specifically limited in this embodiment of the present invention.
S412. The MC client receives the second information.

According to the foregoing solution, the MC client may learn of a processing result of the LMS based on the second information, and then perform further processing based on the processing result. For example, after determining that the association relationship fails to be established, the MC client may re-send a first message to the LMS to re-report the first information, so that the LMS can re-establish the association relationship based on the re-sent first information.

### Embodiment 3

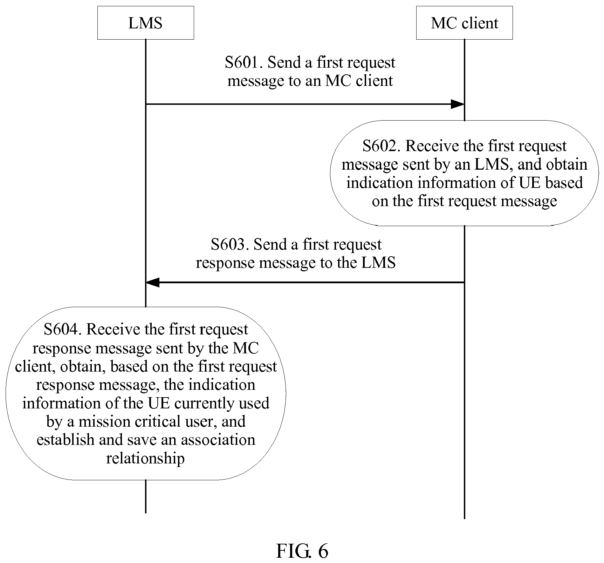

This embodiment of the present invention provides another method for associating a mission critical user with user equipment of the mission critical user. Embodiment 3 differs from Embodiment 1 and Embodiment 2 in that an LMS directly requests, from an MC client, indication information of UE currently used by a mission critical user, and then the MC client obtains the indication information of the UE currently used by the mission critical user, and sends the indication information of the UE currently used by the mission critical user to the LMS, so that the LMS establishes, on such a basis, an association relationship between identity information of the mission critical user and the indication information of the UE currently used by the mission critical user. Specifically, as shown in FIG. 6, the method includes steps S601 to S604.
S601. The LMS sends a first request message to the MC client.

The first request message carries identity information of a mission critical user, and the first request message is used to request indication information of UE currently used by the mission critical user. The UE currently used by the mission critical user is UE on which the MC client is located, and the mission critical user is a mission critical user who exclusively occupies the UE or a mission critical user who is currently in an active state among a plurality of mission critical users sharing the UE.

It should be noted that an event that triggers the LMS to send the first request message to the MC client may be specifically that a location event for locating the mission critical user occurs, or the LMS receives another location service request, or identification information of the UE used by the mission critical user becomes invalid (when the indication information includes a life cycle timer associated with the identification information of the UE), or the like. This is not specifically limited in this embodiment of the present invention.
S602. The MC client receives the first request message sent by the LMS, and obtains indication information of UE based on the first request message.

The indication information of the UE includes identification information of the UE, or identification information of the UE and a life cycle timer associated with the identification information of the UE. For a specific method for obtaining, by the MC client, the indication information of the UE currently used by the mission critical user, refer to the related description in Embodiment 1. Details are not described herein again in this embodiment of the present invention.
S603. The MC client sends a first request response message to the LMS.

The first request response message carries the indication information of the UE currently used by the mission critical user.
S604. The LMS receives the first request response message sent by the MC client, obtains, based on the first request response message, the indication information of the UE currently used by a mission critical user, and establishes and saves an association relationship.

According to the method for associating a mission critical user with user equipment of the mission critical user provided in this embodiment of the present invention, the LMS requests, from the MC client, the indication information of the UE currently used by the mission critical user, and the MC client obtains the indication information of the UE currently used by the mission critical user, and sends the indication information of the UE currently used by the mission critical user to the LMS, so that the LMS establishes, on such a basis, the association relationship between the identity information of the mission critical user and the indication information of the UE currently used by the mission critical user, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

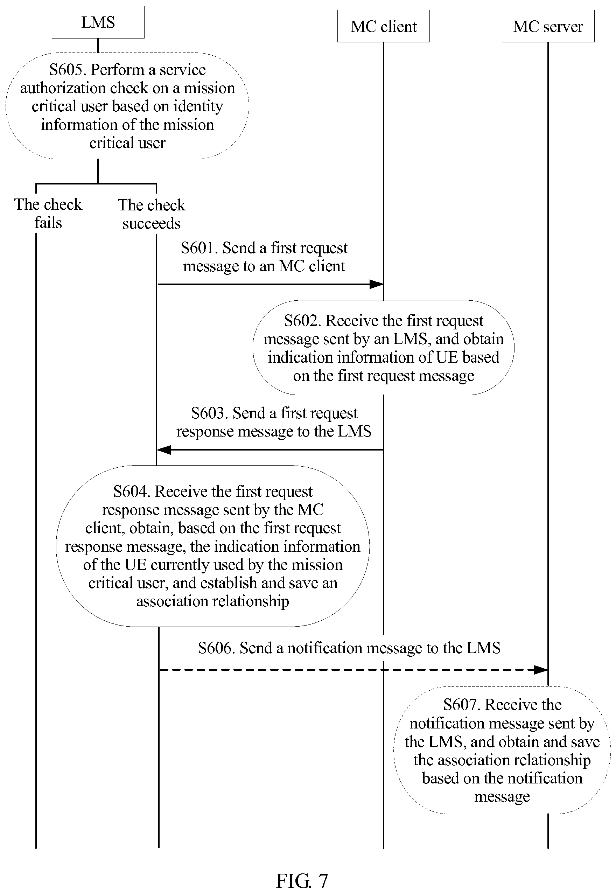

Optionally, as shown in FIG. 7, before step S601, the method for associating a mission critical user with user equipment of the mission critical user provided in this embodiment of the present invention may further include step S605.
S605. The LMS performs a service authorization check on the mission critical user based on identity information of the mission critical user.

For specific content of the service authorization check, refer to the description in Embodiment 1. Details are not described herein again.

As shown in FIG. 7, if the service authorization check performed by the LMS on the mission critical user succeeds, the LMS performs step S601. On the contrary, if the service authorization check performed by the LMS on the mission critical user fails, the LMS no longer performs step S601, and a process in which the LMS requests the indication information of the UE currently used by the mission critical user ends. In other words, the indication information of the UE currently used by the mission critical user is requested from the MC client after it is ensured that an identity of the mission critical user is valid, so as to establish the association relationship. In this way, validity of the subsequently established association relationship can be ensured, and establishment of an invalid association relationship is avoided.

Optionally, still referring to FIG. 7, after the LMS establishes and saves the association relationship, in other words, after step S605, the method may further include steps S606 and S607.
S606. The LMS sends a notification message to an MC server.

The notification message carries the association relationship established by the LMS.
S607. The MC server receives the notification message sent by the LMS, and obtains and saves the association relationship based on the notification message.

To be specific, after successfully establishing the association relationship, the LMS sends, to the MC server, the notification message that carries the established association relationship, so that after receiving the notification message, the MC server obtains and saves the association relationship based on the notification message. In this way, if the LMS subsequently requests, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

### Embodiment 4

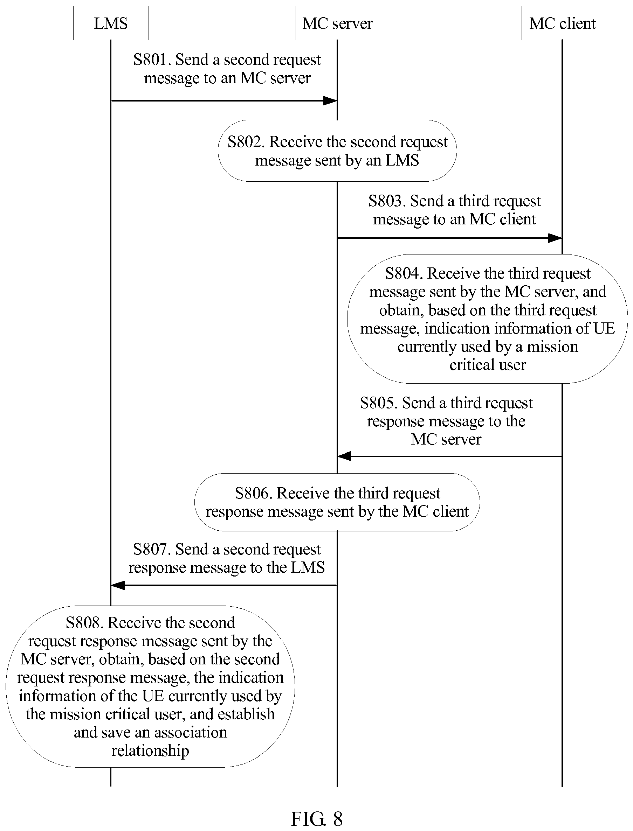

This embodiment of the present invention provides another method for associating a mission critical user with user equipment of the mission critical user. Embodiment 4 differs from Embodiment 3 in that an LMS requests, from an MC client through an MC server, indication information of UE currently used by a mission critical user, and the MC client obtains the indication information of the UE currently used by the mission critical user, and sends the indication information of the UE currently used by the mission critical user to the LMS through the MC server, so that the LMS establishes, on such a basis, an association relationship between identity information of the mission critical user and the indication information of the UE currently used by the mission critical user. Specifically, as shown in FIG. 8, the method includes steps S801 to S808.
S801. The LMS sends a second request message to the MC server.

The second request message is used to request indication information of UE currently used by a mission critical user, and the second request message carries identity information of the mission critical user. The UE currently used by the mission critical user is UE on which the MC client is located, and the mission critical user is a mission critical user who exclusively occupies the UE or a mission critical user who is currently in an active state among a plurality of mission critical users sharing the UE.

It should be noted that an event that triggers the LMS to send the second request message to the MC server may be specifically that a location event for locating the mission critical user occurs, or the LMS receives another location service request, or a life cycle timer associated with identification information of the UE used by the mission critical user expires (when the indication information includes the life cycle timer associated with the identification information of the UE), or the like. This is not specifically limited in this embodiment of the present invention.
S802. The MC server receives the second request message sent by the LMS.
S803. The MC server sends a third request message to the MC client.

The third request message is used to request the indication information of the user equipment UE currently used by the mission critical user, and the third request message carries the identity information of the mission critical user.

It should be noted that in a specific implementation, the third request message may be the same as or different from the second request message. To be specific, after receiving the second request message, the MC server may transparently transmit/forward the second request message to the LMS, or may parse the second request message to obtain the identity information of the mission critical user, add the identity information of the mission critical user to another message, and send the another message to the MC client, to request the indication information of the UE currently used by the mission critical user. This is not specifically limited in this embodiment of the present invention.
S804. The MC client receives the third request message sent by the MC server, and obtains, based on the third request message, indication information of UE currently used by a mission critical user.

The indication information of the UE includes identification information of the UE, or identification information of the UE and a life cycle timer associated with the identification information of the UE. For a specific method for obtaining, by the MC client, the indication information of the UE currently used by the mission critical user, refer to the related description in Embodiment 1. Details are not described herein again in this embodiment of the present invention.
S805. The MC client sends a third request response message to the MC server.

The third request response message carries the indication information of the UE currently used by the mission critical user.
S806. The MC server receives the third request response message sent by the MC client.
S807. The MC server sends a second request response message to the LMS.

The second request response message carries the indication information of the UE currently used by the mission critical user.

It should be noted that in a specific implementation, the second request response message may be the same as or different from the third request response message. To be specific, after receiving the third request response message, the MC server may transparently transmit/forward the third request message to the LMS, or may parse the third request message to obtain the identification information of the UE currently used by the mission critical user, add the identification information of the UE currently used by the mission critical user to another message, and send the another message to the LMS. This is not specifically limited in this embodiment of the present invention.
S808. The LMS receives the second request response message sent by the MC server, obtains, based on the second request response message, the indication information of the UE currently used by the mission critical user, and establishes and saves an association relationship.

According to the method for associating a mission critical user with user equipment of the mission critical user provided in this embodiment of the present invention, the LMS requests, from the MC client through the MC server, the indication information of the UE currently used by the mission critical user, and then the MC client obtains the indication information of the UE currently used by the mission critical user, and sends the indication information of the UE currently used by the mission critical user to the LMS through the MC server, so that the LMS establishes, on such a basis, the association relationship between the identity information of the mission critical user and the indication information of the UE currently used by the mission critical user, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

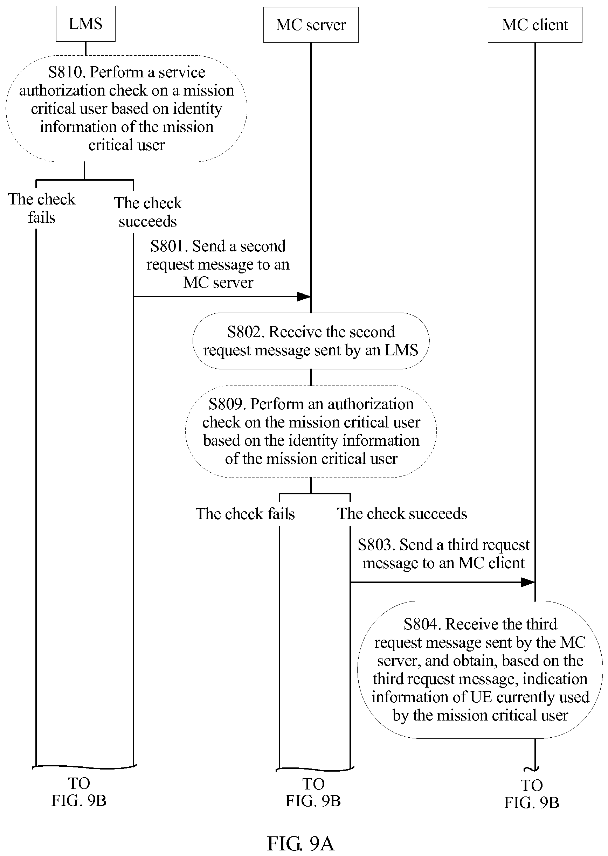

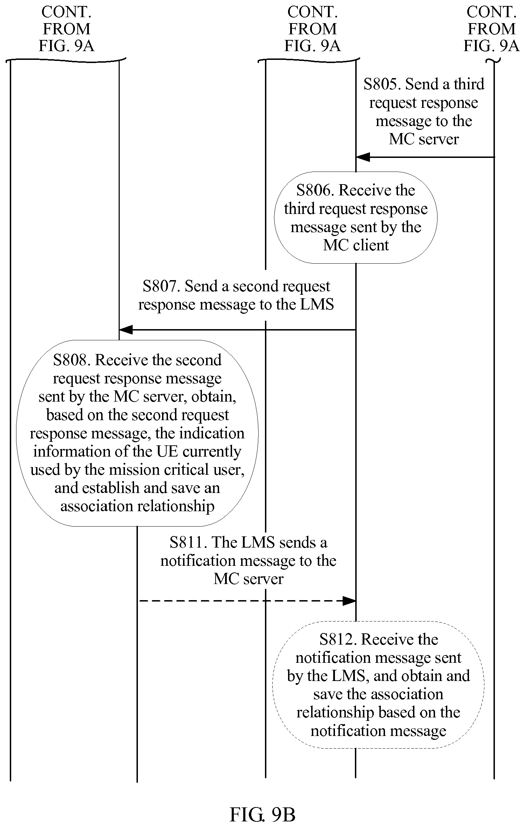

Optionally, as shown in FIG. 9A and FIG. 9B, before the MC server sends the third request message to the MC client, in other words, before step S803, the method for associating a mission critical user with user equipment of the mission critical user provided in this embodiment of the present invention may further include step S809.
S809. The MC server performs an authorization check on the mission critical user based on identity information of the mission critical user.

For specific content of the authorization check, refer to the related description in Embodiment 2. Details are not described herein again.

As shown in FIG. 9A and FIG. 9B, if the authorization check performed by the MC server on the mission critical user succeeds, the MC server sends the third request message to the MC client. On the contrary, if the authorization check performed by the MC server on the mission critical user fails, the MC server stops requesting, from the MC client, the indication information of the UE currently used by the mission critical user, and sends an answer message to the LMS (not shown in the figure), to notify the LMS that an identifier that is of the UE currently used by the mission critical user and that is requested by the LMS fails to be obtained.

Optionally, still referring to FIG. 9A and FIG. 9B, before step S801, the method for associating a mission critical user with user equipment of the mission critical user provided in this embodiment of the present invention may further include step S810.
S810. The LMS performs a service authorization check on the mission critical user based on the identity information of the mission critical user.

For specific content of the service authorization check, refer to the related description in Embodiment 1. Details are not described herein again.

As shown in FIG. 9A and FIG. 9B, if the service authorization check performed by the LMS on the mission critical user succeeds, the LMS performs step S801 to obtain the indication information of the UE currently used by the mission critical user. On the contrary, if the service authorization check performed by the LMS on the mission critical user fails, the LMS no longer performs step S801, and a process in which the LMS requests the indication information of the UE currently used by the mission critical user ends. In other words, the indication information of the UE currently used by the mission critical user is requested from the MC client through the MC server after it is ensured that an identity of the mission critical user is valid, so as to establish the association relationship. In this way, validity of the subsequently established association relationship can be ensured, and establishment of an invalid association relationship is avoided.

Optionally, still referring to FIG. 9A and FIG. 9B, after the LMS establishes and saves the association relationship, the method may further include steps S811 and S812.
S811. The LMS sends a notification message to the MC server.

The notification message carries the association relationship established by the LMS.
S812. The MC server receives the notification message sent by the LMS, and obtains and saves the association relationship based on the notification message.

To be specific, after successfully establishing the association relationship, the LMS sends, to the MC server, the notification message that carries the established association relationship, so that after receiving the notification message, the MC server obtains and saves the association relationship based on the notification message. In this way, if the LMS subsequently requests again, from the MC client through the MC server, the indication information of the UE currently used by the mission critical user, the MC server may first query an association relationship saved on the MC server, and if the association relationship about the mission critical user already exists, and the association relationship is still valid (when the indication information includes the life cycle timer associated with the identification information), the MC server may directly return the association relationship to the LMS, so that the LMS determines, based on the association relationship, the indication information of the UE currently used by the mission critical user.

### Embodiment 5

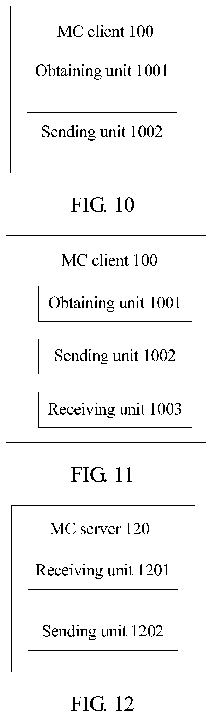

Based on the methods provided in Embodiment 1 and Embodiment 2, this embodiment of the present invention provides an MC client 100, configured to perform the method in Embodiment 1 or Embodiment 2. As shown in FIG. 10, the MC client 100 includes an obtaining unit 1001 and a sending unit 1002.

The obtaining unit 1001 is configured to obtain indication information of UE currently used by a mission critical user.

The sending unit 1002 is configured to send first information to an LMS, so that the LMS establishes and saves an association relationship based on the first information.

The first information includes identity information of the mission critical user and the indication information of the UE currently used by the mission critical user. The indication information of the UE includes identification information of the UE, or identification information of the UE and a life cycle timer associated with the identification information of the UE.

Optionally, the identification information of the UE includes an IMSI of the UE, or an MSISDN of the UE, or an IP address of the UE, or pseudo identification information of the UE.

Optionally, in the MC client 100 provided in this embodiment of the present invention, the sending unit 1002 may be specifically configured to:
send the first information to the LMS through an MC server.

Optionally, in the MC client 100 provided in this embodiment of the present invention, the obtaining unit 1001 may be specifically configured to:
obtain the indication information of the UE from the UE currently used by the mission critical user, where the indication information of the UE is generated by the UE or obtained by the UE from a network side.

Further, as shown in FIG. 11, the MC client 100 provided in this embodiment of the present invention may further include:
a receiving unit 1003, configured to receive second information by the MC client 100.

The second information includes information indicating a result of establishing the association relationship.

Specifically, for a method for associating a mission critical user with user equipment of the mission critical user by the MC client 100 provided in this embodiment of the present invention, refer to the descriptions in Embodiment 1 and Embodiment 2. Details are not described herein again in this embodiment of the present invention.

Because the MC client 100 in this embodiment can be used to perform the method in Embodiment 1 or Embodiment 2, for technical effects that the MC client 100 can achieve, refer to the description in the foregoing method embodiment. Details are not described herein again.

### Embodiment 6

Based on the method provided in Embodiment 2, this embodiment of the present invention provides an MC server 120, configured to perform the method in Embodiment 2. As shown in FIG. 12, the MC server 120 includes a receiving unit 1201 and a sending unit 1202.

The receiving unit 1201 is configured to receive first information sent by an MC client.

The sending unit 1202 is configured to send the first information to an LMS, so that the LMS establishes and saves an association relationship based on the first information.

The first information includes identity information of a mission critical user and indication information of UE currently used by the mission critical user. The indication information of the UE includes identification information of the UE, or identification information of the UE and a life cycle timer associated with the identification information of the UE.

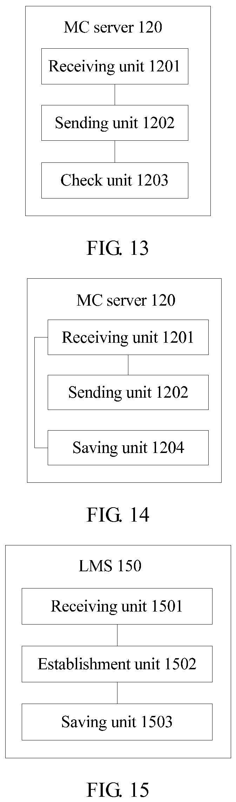

Optionally, as shown in FIG. 13, the MC server 120 provided in this embodiment of the present invention may further include:
a check unit 1203, configured to: before the sending unit 1202 sends the first information to the LMS, perform an authorization check on the mission critical user based on the identity information of the mission critical user.

The sending unit 1202 may be specifically configured to:
if the authorization check performed by the check unit 1203 on the mission critical user succeeds, send the first information to the LMS.

Optionally, in the MC server 120 provided in this embodiment of the present invention, the receiving unit 1201 may be further configured to: after the sending unit 1202 sends the first information to the LMS, receive second information sent by the LMS.

The sending unit 1202 may be further configured to:
send the second information to the MC client.

The second information includes information indicating a result of establishing the association relationship.

Optionally, in the MC server 120 provided in this embodiment of the present invention, the second information may further include the association relationship.

As shown in FIG. 14, the MC server 120 provided in this embodiment of the present invention may further include:
a saving unit 1204, configured to save the association relationship after the receiving unit 1201 receives the second information sent by the LMS.

Specifically, for a method for associating a mission critical user with user equipment of the mission critical user by the MC server 120 provided in this embodiment of the present invention, refer to the description in Embodiment 2. Details are not described herein again in this embodiment of the present invention.

Because the MC server 120 in this embodiment can be used to perform the method in Embodiment 2, for technical effects that the MC server 120 can achieve, refer to the description in the foregoing method embodiment. Details are not described herein again.

### Embodiment 7

Based on the methods provided in Embodiment 1 and Embodiment 2, this embodiment of the present invention provides an LMS 150, configured to perform the method in Embodiment 1 or Embodiment 2. As shown in FIG. 15, the LMS 150 includes a receiving unit 1501, an establishment unit 1502, and a saving unit 1503.

The receiving unit 1501 is configured to receive first information sent by an MC client.

The establishment unit 1502 is configured to establish an association relationship based on the first information.

The saving unit 1503 is configured to save the association relationship.

The first information includes identity information of a mission critical user and indication information of UE currently used by the mission critical user. The indication information of the UE includes identification information of the UE, or identification information of the UE and a life cycle timer associated with the identification information of the UE.

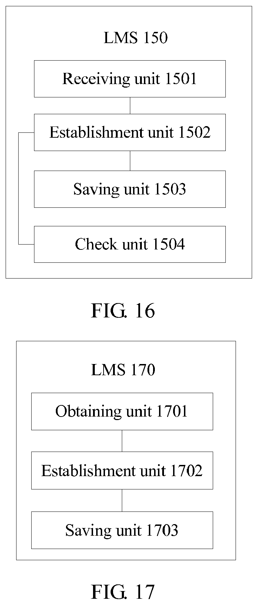

Optionally, as shown in FIG. 16, the LMS 150 provided in this embodiment of the present invention may further include:
a check unit 1504, configured to: before the establishment unit 1502 establishes the association relationship, perform a service authorization check on the mission critical user based on the identity information of the mission critical user.

The establishment unit 1502 may be specifically configured to:
if the service authorization check performed by the check unit 1504 on the mission critical user succeeds, establish the association relationship.

Optionally, in the LMS 150 provided in this embodiment of the present invention, the receiving unit 1501 may be further configured to:
receive the first information sent by the MC client through an MC server.

Optionally, in the LMS 150 provided in this embodiment of the present invention, a sending unit may be further configured to:
send second information to the MC client.

The second information includes information indicating a result of establishing the association relationship.

Further, in the LMS 150 provided in this embodiment of the present invention, a sending unit may be further configured to:
send second information to an MC server.

The second information includes information indicating a result of establishing the association relationship.

Optionally, if the association relationship is successfully established, the second information may further include the association relationship.

Specifically, for a method for associating a mission critical user with user equipment of the mission critical user by the LMS 150 provided in this embodiment of the present invention, refer to the descriptions in Embodiment 1 and Embodiment 2. Details are not described herein again in this embodiment of the present invention.

Because the LMS 150 in this embodiment can be used to perform the method in Embodiment 1 or Embodiment 2, for technical effects that the LMS 150 can achieve, refer to the description in the foregoing method embodiment. Details are not described herein again.

### Embodiment 8

Based on the methods provided in Embodiment 3 and Embodiment 4, this embodiment of the present invention provides an LMS 170, configured to perform the method in Embodiment 3 or Embodiment 4. As shown in FIG. 17, the LMS 170 includes an obtaining unit 1701, an establishment unit 1702, and a saving unit 1703.

The obtaining unit 1701 is configured to obtain indication information of UE currently used by a mission critical user.

The establishment unit 1702 is configured to establish an association relationship.

The saving unit 1703 is configured to save the association relationship.

The indication information of the UE includes identification information of the UE, or identification information of the UE and a life cycle timer associated with the identification information of the UE.

In an optional implementation, the obtaining unit 1701 may be specifically configured to:
send a first request message to an MC client;
receive a first request response message sent by the MC client, where the first request response message carries the indication information of the UE currently used by the mission critical user; and
obtain, based on the first request response message, the indication information of the UE currently used by the mission critical user.

The first request message carries identity information of the mission critical user, and the first request message is used to request the indication information of the UE currently used by the mission critical user.

In another optional implementation, the obtaining unit 1701 may be specifically configured to:
send a second request message to an MC server;
receive a second request response message sent by the MC server, where the second request response message carries the indication information of the UE currently used by the mission critical user; and
obtain, based on the second request response message, the indication information of the UE currently used by the mission critical user.

The second request message is used to request the indication information of the UE currently used by the mission critical user, and the second request message carries identity information of the mission critical user.

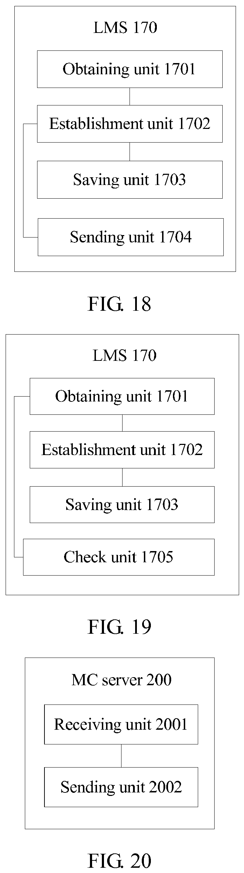

Optionally, as shown in FIG. 18, the LMS 170 provided in this embodiment of the present invention may further include:
a sending unit 1704, configured to: after the establishment unit 1702 establishes the association relationship, send a notification message to an MC server.

The notification message carries the association relationship.

Optionally, as shown in FIG. 19, the LMS 170 provided in this embodiment of the present invention may further include:
a check unit 1705, configured to: before the obtaining unit 1701 obtains the indication information of the UE currently used by the mission critical user, perform a service authorization check on the mission critical user based on the identity information of the mission critical user.

The obtaining unit 1701 may be specifically configured to:
if the service authorization check performed by the check unit 1705 on the mission critical user succeeds, obtain, based on the identity information of the mission critical user, the indication information of the UE currently used by the mission critical user.

Specifically, for a method for associating a mission critical user with user equipment of the mission critical user by the LMS 170 provided in this embodiment of the present invention, refer to the descriptions in Embodiment 3 and Embodiment 4. Details are not described herein again in this embodiment of the present invention.

Because the LMS 170 in this embodiment can be used to perform the method in Embodiment 3 or Embodiment 4, for technical effects that the LMS 170 can achieve, refer to the description in the foregoing method embodiment. Details are not described herein again.

### Embodiment 9

Based on the method provided in Embodiment 4, this embodiment of the present invention provides an MC server 200, configured to perform the method in Embodiment 4. As shown in FIG. 20, the MC server 200 includes a receiving unit 2001 and a sending unit 2002.

The receiving unit 2001 is configured to receive a second request message sent by an LMS.

The sending unit 2002 is configured to send a third request message to an MC client.

The receiving unit 2001 is further configured to receive a third request response message sent by the MC client.

The sending unit 2002 is further configured to send a second request response message to the LMS, so that the LMS establishes and saves an association relationship based on the second request response message.

The second request message and the third request message are used to request indication information of UE currently used by a mission critical user, and the second request message and the third request message carry identity information of the mission critical user. The third request response message carries the indication information of the UE currently used by the mission critical user.

The indication information of the UE includes identification information of the UE, or identification information of the UE and a life cycle timer associated with the identification information of the UE.

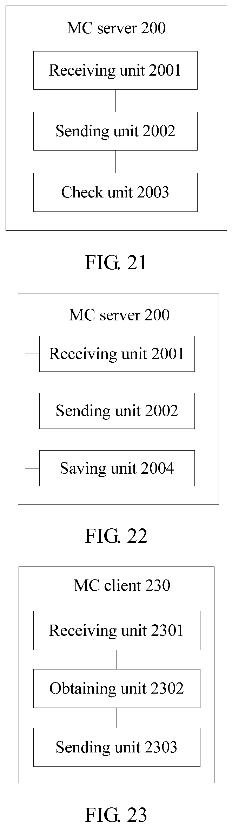

Optionally, as shown in FIG. 21, the MC server 200 provided in this embodiment of the present invention may further include:
a check unit 2003, configured to: before the sending unit 2002 sends the third request message to the MC client, perform an authorization check on the mission critical user based on the identity information of the mission critical user.

The sending unit 2002 may be specifically configured to:
if the authorization check performed by the check unit 2003 on the mission critical user succeeds, send the third request message to the MC client.

Optionally, as shown in FIG. 22, the MC server 200 provided in this embodiment of the present invention may further include a saving unit 2004.

The receiving unit 2001 is further configured to: after receiving the third request response message sent by the MC client, receive a notification message sent by the LMS.

An obtaining unit is further configured to obtain the association relationship based on the notification message.

The saving unit 2004 is configured to save the association relationship.

The notification message carries the association relationship.

Specifically, for a method for associating a mission critical user with user equipment of the mission critical user by the MC server 200 provided in this embodiment of the present invention, refer to the description in Embodiment 4. Details are not described herein again in this embodiment of the present invention.

Because the MC server 200 in this embodiment can be used to perform the method in Embodiment 4, for technical effects that the MC server 200 can achieve, refer to the description in the foregoing method embodiment. Details are not described herein again.

### Embodiment 10

Based on the methods provided in Embodiment 3 and Embodiment 4, this embodiment of the present invention provides an MC client 230, configured to perform the method in Embodiment 3 or Embodiment 4. As shown in FIG. 23, the MC client 230 includes a receiving unit 2301, an obtaining unit 2302, and a sending unit 2303.

The receiving unit 2301 is configured to receive a first request message sent by an LMS;
the obtaining unit 2302 is configured to obtain indication information of UE based on the first request message; and
the sending unit 2303 is configured to send a first request response message to the LMS, so that the LMS establishes and saves an association relationship between identity information of a mission critical user and the indication information of the UE based on the first request response message; or
the receiving unit 2301 is configured to receive a third request message sent by an MC server;
the obtaining unit 2302 is configured to obtain indication information of UE based on the third request message; and
the sending unit 2303 is configured to send a third request response message to the MC server, so that the MC server sends a second request response message to an LMS, and the LMS establishes and saves an association relationship between identity information of a mission critical user and the indication information of the UE based on the second request response message.

The first request message/the third request message is used to request the indication information of the UE currently used by the mission critical user, and the first request message/the third request message carries the identity information of the mission critical user. The first request response message/the second request response message/the third request response message carries the indication information of the UE.

The indication information of the UE includes identification information of the UE, or identification information of the UE and a life cycle timer associated with the identification information of the UE.

Optionally, in the MC client 230 provided in this embodiment of the present invention, the obtaining unit 2302 may be specifically configured to:
obtain the indication information of the UE from the UE based on the first request message, where the indication information of the UE is generated by the UE or obtained by the UE from a network side; or
obtain the indication information of the UE from the UE based on the third request message, where the indication information of the UE is generated by the UE or obtained by the UE from a network side.

Specifically, for a method for associating a mission critical user with user equipment of the mission critical user by the MC client 230 provided in this embodiment of the present invention, refer to the descriptions in Embodiment 3 and Embodiment 4. Details are not described herein again in this embodiment of the present invention.

Because the MC client 230 in this embodiment can be used to perform the method in Embodiment 3 or Embodiment 4, for technical effects that the MC client 230 can achieve, refer to the description in the foregoing method embodiment. Details are not described herein again.

### Embodiment 11

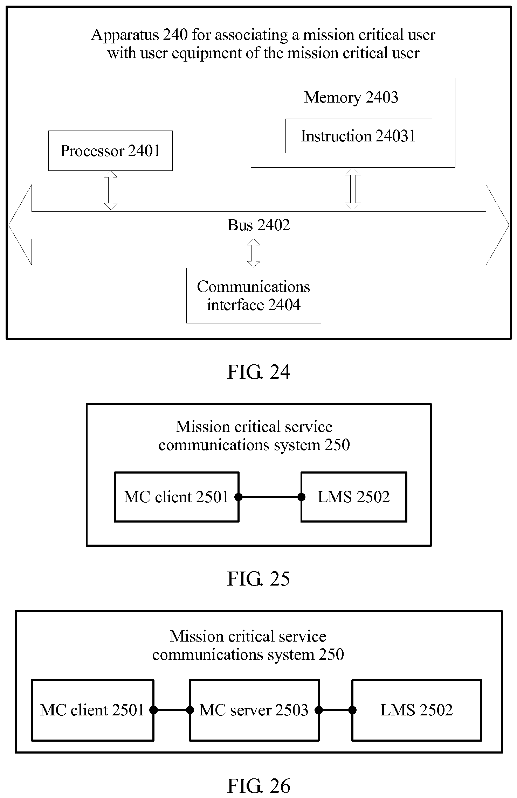

Corresponding to the foregoing method embodiment, this embodiment of the present invention provides an apparatus for associating a mission critical user with user equipment of the mission critical user. As shown in FIG. 24, the apparatus 240 for associating a mission critical user with user equipment of the mission critical user includes a processor 2401, a memory 2403, a bus 2402, and a communications interface 2404.

The processor 2401, the memory 2403, and the communications interface 2404 are connected and communicate with each other by using the bus 2402.

The processor 2401 may be a single-core or multi-core central processing unit, or an application-specific integrated circuit, or one or more integrated circuits configured to implement this embodiment of the present invention.

The memory 2403 may be a high-speed random access memory (Random Access Memory, RAM), or may be a non-volatile memory (non-volatile memory), for example, at least one magnetic disk storage.

The memory 2403 is configured to store a computer executable instruction 24031. Specifically, the computer executable instruction 24031 may include program code.

When the apparatus 240 for associating a mission critical user with user equipment of the mission critical user runs, the processor 2401 executes the computer executable instruction 24031, to perform a procedure of the method for associating a mission critical user with user equipment of the mission critical user by an MC client side or an LMS side in any one of the method embodiments in FIG. 2 to FIG. 8, or perform a procedure of the method for associating a mission critical user with user equipment of the mission critical user by an MC server side in any one of the method embodiments in FIG. 3 to FIG. 5A and FIG. 5B, or FIG. 7 to FIG. 9A and FIG. 9B. When performing the procedure of the method for associating a mission critical user with user equipment of the mission critical user by a UE side in any one of the method embodiments in FIG. 2 to FIG. 8, the apparatus 240 for associating a mission critical user with user equipment of the mission critical user is an MC client. When performing the procedure of the method for associating a mission critical user with user equipment of the mission critical user by the LMS side in any one of the method embodiments in FIG. 2 to FIG. 8, the apparatus 240 for associating a mission critical user with user equipment of the mission critical user is an LMS. When performing the procedure of the method for associating a mission critical user with user equipment of the mission critical user by the MC server side in any one of the method embodiments in FIG. 3 to FIG. 5A and FIG. 5B, or FIG. 7 to FIG. 9A and FIG. 9B, the apparatus 240 for associating a mission critical user with user equipment of the mission critical user is an MC server.

Because the apparatus 240 for associating a mission critical user with user equipment of the mission critical user in this embodiment can be used to perform the foregoing methods, for technical effects that the apparatus 240 can achieve, refer to the descriptions in the foregoing method embodiments. Details are not described herein again.

### Embodiment 12

This embodiment of the present invention provides a mission critical service communications system 250. As shown in FIG. 25, the mission critical service communications system 250 includes an MC client 2501 and an LMS 2502.

The MC client 2501 obtains indication information of user equipment UE currently used by a mission critical user, and sends first information to the LMS 2502. The LMS 2502 receives the first information sent by the MC client 2501, and establishes and saves, based on the first information, an association relationship between identity information of the mission critical user and the indication information of the UE currently used by the mission critical user.

The first information includes the identity information of the mission critical user and the indication information of the UE currently used by the mission critical user. The indication information of the UE includes identification information of the UE, or identification information of the UE and a life cycle timer associated with the identification information.

Optionally, as shown in FIG. 26, the mission critical service communications system 250 provided in this embodiment of the present invention may further include an MC server 2503.

That the MC client 2501 sends a first message to the LMS 2502 may specifically include:
the MC client 2501 sends the first information to the LMS 2502 through the MC server 2503.

That the LMS 2502 receives the first information sent by the MC client 2501 may specifically include:
the LMS 2502 receives the first information sent by the MC client 2501 through the MC server 2503.

According to the mission critical service communications system provided in this embodiment of the present invention, the LMS may establish the association relationship between the identity of the mission critical user and the indication information of the user equipment of the mission critical user based on the first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

### Embodiment 13

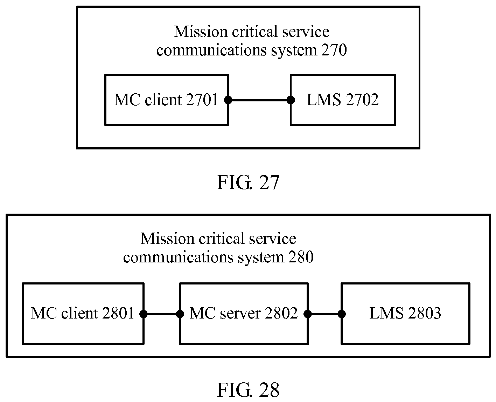

This embodiment of the present invention provides a mission critical service communications system 270. As shown in FIG. 27, the mission critical service communications system 270 includes an MC client 2701 and an LMS 2702.

The LMS 2702 sends a first request message to the MC client 2701. The MC client 2701 receives the first request message sent by the LMS 2702, and obtains indication information of UE based on the first request message. The MC client 2701 sends a first request response message to the LMS 2702. The LMS 2702 receives the first request response message sent by the MC client 2701, and obtains, based on the first request response message, the indication information of the UE currently used by a mission critical user. The LMS 2702 establishes and saves an association relationship between identity information of the mission critical user and the indication information of the UE.

The first request message carries the identity information of the mission critical user, and the first request message is used to request the indication information of the user equipment UE currently used by the mission critical user. The indication information of the UE includes identification information of the UE, or identification information of the UE and a life cycle timer associated with the identification information. The first request response message carries the indication information of the UE currently used by the mission critical user.

According to the mission critical service communications system provided in this embodiment of the present invention, the LMS may establish the association relationship between the identity of the mission critical user and the indication information of the user equipment of the mission critical user based on first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

### Embodiment 14

This embodiment of the present invention provides a mission critical service communications system 280. As shown in FIG. 28, the mission critical service communications system 280 includes an MC client 2801, an MC server 2802, and an LMS 2803.

The LMS 2803 sends a second request message to the MC server 2802. The MC server 2802 receives the second request message sent by the LMS 2803, and sends a third request message to the MC client 2801. The MC client 2801 receives the third request message sent by the MC server 2802, and obtains indication information of UE based on the third request message. The MC client 2801 sends a third request response message to the MC server 2802. The MC server 2802 receives the third request response message sent by the MC client 2801, and sends a second request response message to the LMS 2803. The LMS 2803 receives the second request response message sent by the MC server 2802, obtains, based on the second request response message, the indication information of the UE currently used by a mission critical user, and establishes and saves an association relationship between identity information of the mission critical user and the indication information of the UE.

The second request message and the third request message are used to request the indication information of the user equipment UE currently used by the mission critical user, and the second request message and the third request message carry the identity information of the mission critical user. The indication information of the UE includes identification information of the UE, or identification information of the UE and a life cycle timer associated with the identification information. The second request response message and the third request response message carry the indication information of the UE currently used by the mission critical user.

According to the mission critical service communications system provided in this embodiment of the present invention, the LMS may establish the association relationship between the identity of the mission critical user and the indication information of the user equipment of the mission critical user based on first information, to associate the mission critical user with the user equipment currently used by the mission critical user. In this way, even if the identity information of the mission critical user is isolated from the identification information of the UE used by the mission critical user, the LMS can still determine, by using the established association relationship based on the identity information of the mission critical user, the identification information of the UE currently used by the mission critical user, so as to obtain location information of the mission critical user through a mobile communications network entity based on the identification information.

In addition, a computer readable medium (or medium) is further provided, including a computer readable instruction for performing the following operation when the instruction is executed: performing the operations of any device in the method embodiments shown in FIG. 2 to FIG. 8 in the foregoing embodiments.

In addition, a computer program product is further provided, including the foregoing computer readable medium.

It should be understood that sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

It may be clearly understood by a person skilled in the art that for convenient and brief description, division of the foregoing function modules is used as an example for illustration for the apparatus described above. In an actual application, the foregoing functions can be allocated to different function modules and implemented based on a requirement, in other words, an inner structure of an apparatus is divided into different function modules to implement all or some of the functions described above. For a detailed working process of the foregoing system, apparatus, and unit, refer to a corresponding process in the foregoing method embodiments. Details are not described herein.

It may be clearly understood by a person skilled in the art that for convenient and brief description, division of the foregoing function modules is used as an example for illustration for the apparatus described above. In an actual application, the foregoing functions can be allocated to different function modules and implemented based on a requirement, in other words, an inner structure of an apparatus is divided into different function modules to implement all or some of the functions described above. For a detailed working process of the foregoing system, apparatus, and unit, refer to a corresponding process in the foregoing method embodiments. Details are not described herein.

In the embodiments provided in this application, it should be understood that the disclosed system, apparatus, and method may be implemented in other manners. For example, the described apparatus embodiment is only an example. For example, the module or unit division is only logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed to a plurality of network units. Some or all of the units may be selected based on actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The storage medium includes any medium that can store program code, such as a USB flash drive, a removable hard disk, a read-only memory (Read-Only Memory, ROM), a RAM, a magnetic disk, or an optical disc.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for associating a mission critical user with user equipment of the mission critical user, comprising:
obtaining, by a mission critical MC client, indication information of user equipment UE currently used by a mission critical user, wherein the indication information of the UE comprises identification information of the UE, or identification information of the UE and a life cycle timer associated with the identification information; and
sending, by the MC client, first information to a location management server LMS, so that the LMS establishes and saves, based on the first information, an association relationship between identity information of the mission critical user and the indication information of the UE currently used by the mission critical user, wherein the first information comprises the identity information of the mission critical user and the indication information of the UE currently used by the mission critical user.

2. The method according to claim 1, wherein the identification information of the UE comprises an international mobile subscriber identity IMSI of the UE, or a mobile station integrated services digital network number MSISDN of the UE, or an Internet Protocol IP address of the UE, or pseudo identification information of the UE.

3. The method according to claim 1 or 2, wherein the sending, by the MC client, a first message to an LMS comprises:
sending, by the MC client, the first information to the LMS through an MC server.

4. The method according to any one of claims 1 to 3, wherein the obtaining, by an MC client, indication information of UE currently used by a mission critical user comprises:
obtaining, by the MC client, the indication information of the UE from the UE currently used by the mission critical user, wherein the indication information of the UE is generated by the UE or obtained by the UE from a network side.

5. The method according to any one of claims 1 to 4, further comprising: receiving, by the MC client, second information, wherein the second information comprises information indicating a result of establishing the association relationship.

6. A method for associating a mission critical user with user equipment of the mission critical user, comprising:
receiving, by a mission critical MC server, first information sent by an MC client, wherein the first information comprises identity information of a mission critical user and indication information of user equipment UE currently used by the mission critical user, and the indication information of the UE comprises identification information of the UE, or identification information of the UE and a life cycle timer associated with the identification information; and
sending, by the MC server, the first information to a location management server LMS, so that the LMS establishes and saves, based on the first information, an association relationship between the identity information of the mission critical user and the indication information of the UE currently used by the mission critical user.

7. The method according to claim 6, wherein before the sending, by the MC server, the first information to an LMS, the method further comprises:
performing, by the MC server, an authorization check on the mission critical user based on the identity information of the mission critical user; and
the sending, by the MC server, the first information to an LMS comprises:
if the authorization check performed by the MC server on the mission critical user succeeds, sending, by the MC server, the first information to the LMS.

8. The method according to claim 6 or 7, wherein after the sending, by the MC server, the first information to a location management server LMS, the method further comprises:
receiving, by the MC server, second information sent by the LMS, wherein the second information comprises information indicating a result of establishing the association relationship; and
sending, by the MC server, the second information to the MC client.

9. The method according to claim 8, wherein the second information further comprises the association relationship; and
after the receiving, by the MC server, second information sent by the LMS, the method further comprises:
saving, by the MC server, the association relationship.

10. A method for associating a mission critical user with user equipment of the mission critical user, comprising:
receiving, by a location management server LMS, first information sent by a mission critical MC client, wherein the first information comprises identity information of a mission critical user and indication information of UE currently used by the mission critical user, and the indication information of the UE comprises identification information of the UE, or identification information of the UE and a life cycle timer associated with the identification information; and
establishing and saving, by the LMS based on the first information, an association relationship between the identity information of the mission critical user and the indication information of the UE currently used by the mission critical user.

11. The method according to claim 10, wherein before the establishing and saving, by the LMS, an association relationship between the identity information of the mission critical user and the indication information of the UE currently used by the mission critical user, the method further comprises:
performing, by the LMS, a service authorization check on the mission critical user based on the identity information of the mission critical user; and
the establishing and saving, by the LMS, an association relationship between the identity information of the mission critical user and the indication information of the UE currently used by the mission critical user comprises:
if the service authorization check performed by the LMS on the mission critical user succeeds, establishing and saving, by the LMS, the association relationship between the identity information of the mission critical user and the indication information of the UE currently used by the mission critical user.

12. The method according to claim 10 or 11, wherein the receiving, by an LMS, first information sent by an MC client comprises:
receiving, by the LMS, the first information sent by the MC client through an MC server.

13. The method according to claim 12, further comprising:
sending, by the LMS, second information to the MC client, wherein the second information comprises information indicating a result of establishing the association relationship.

14. The method according to claim 10 or 11, further comprising:
sending, by the LMS, second information to the MC server, wherein the second information comprises information indicating a result of establishing the association relationship.

15. The method according to claim 14, wherein if the association relationship is successfully established, the second information further comprises the association relationship.

16. A method for associating a mission critical user with user equipment of the mission critical user, comprising:
obtaining, by a location management server LMS, indication information of UE currently used by the mission critical user, wherein the indication information of the UE comprises identification information of the UE, or identification information of the UE and a life cycle timer associated with the identification information; and
establishing and saving, by the LMS, an association relationship between identity information of the mission critical user and the indication information of the UE currently used by the mission critical user.

17. The method according to claim 16, wherein the obtaining, by an LMS, indication information of UE currently used by the mission critical user comprises:
sending, by the LMS, a first request message to a mission critical MC client, wherein the first request message carries the identity information of the mission critical user, and the first request message is used to request the indication information of the UE currently used by the mission critical user;
receiving, by the LMS, a first request response message sent by the MC client, wherein the first request response message carries the indication information of the UE currently used by the mission critical user; and
obtaining, by the LMS based on the first request response message, the indication information of the UE currently used by the mission critical user.

18. The method according to claim 16, wherein the obtaining, by an LMS, indication information of UE currently used by the mission critical user comprises:
sending, by the LMS, a second request message to an MC server, wherein the second request message is used to request the indication information of the UE currently used by the mission critical user, and the second request message carries the identity information of the mission critical user;
receiving, by the LMS, a second request response message sent by the MC server, wherein the second request response message carries the indication information of the UE currently used by the mission critical user; and
obtaining, by the LMS based on the second request response message, the indication information of the UE currently used by the mission critical user.

19. The method according to claim 17, wherein after the establishing and saving, by the LMS, an association relationship between identity information of the mission critical user and the indication information of the UE currently used by the mission critical user, the method further comprises:
sending, by the LMS, a notification message to an MC server, wherein the notification message carries the association relationship.

20. The method according to any one of claims 16 to 19, wherein before the obtaining, by an LMS, indication information of UE currently used by the mission critical user, the method further comprises:
performing, by the LMS, a service authorization check on the mission critical user based on the identity information of the mission critical user; and
the obtaining, by an LMS, indication information of UE currently used by the mission critical user comprises:
if the service authorization check performed by the LMS on the mission critical user succeeds, obtaining, by the LMS based on the identity information of the mission critical user, the indication information of the UE currently used by the mission critical user.

21. A method for associating a mission critical user with user equipment of the mission critical user, comprising:
receiving, by a mission critical MC server, a second request message sent by a location management server LMS, wherein the second request message is used to request indication information of user equipment UE currently used by the mission critical user, the indication information of the UE comprises identification information of the UE, or identification information of the UE and a life cycle timer associated with the identification information, and the second request message carries identity information of the mission critical user;
sending, by the MC server, a third request message to an MC client, wherein the third request message is used to request the indication information of the user equipment UE currently used by the mission critical user, and the third request message carries the identity information of the mission critical user;
receiving, by the MC server, a third request response message sent by the MC client, wherein the third request response message carries the indication information of the UE currently used by the mission critical user; and
sending, by the MC server, a second request response message to the LMS, so that the LMS establishes and saves, based on the second request response message, an association relationship between the identity information of the mission critical user and the indication information of the UE currently used by the mission critical user.

22. The method according to claim 21, wherein before the sending, by the MC server, the third request message to an MC client, the method further comprises:
performing, by the MC server, an authorization check on the mission critical user based on the identity information of the mission critical user; and
the sending, by the MC server, the third request message to an MC client comprises:
if the authorization check performed by the MC server on the mission critical user succeeds, sending, by the MC server, the third request message to the MC client.

23. The method according to claim 21 or 22, wherein after the receiving, by the MC server, a third request response message sent by the MC client, the method further comprises:
receiving, by the MC server, a notification message sent by the LMS, wherein the notification message carries the association relationship; and
obtaining and saving, by the MC server, the association relationship based on the notification message.

24. A method for associating a mission critical user with user equipment of the mission critical user, comprising:
receiving, by a mission critical MC client, a first request message sent by a location management server LMS, wherein the first request message is used to request indication information of user equipment UE currently used by the mission critical user, the indication information of the UE comprises identification information of the UE, or identification information of the UE and a life cycle timer associated with the identification information, and the first request message carries identity information of the mission critical user;
obtaining, by the MC client, the indication information of the UE based on the first request message; and
sending, by the MC client, a first request response message to the LMS, so that the LMS establishes and saves an association relationship between the identity information of the mission critical user and the indication information of the UE based on the first request response message, wherein the first request response message carries the indication information of the UE; or
receiving, by the MC client, a third request message sent by an MC server, wherein the third request message is used to request indication information of UE currently used by the mission critical user;
obtaining, by the MC client, the indication information of the UE based on the third request message; and
sending, by the MC client, a third request response message to the MC server, so that the MC server sends a second request response message to the LMS, and the LMS establishes and saves an association relationship between identity information of the mission critical user and the indication information of the UE based on the second request response message, wherein the second request response message and the third request response message carry the indication information of the UE.

25. The method according to claim 24, wherein the obtaining, by the MC client, the indication information of the UE based on the first request message comprises:
obtaining, by the MC client, the indication information of the UE from the UE based on the first request message, wherein the indication information of the UE is generated by the UE or obtained by the UE from a network side; or
the obtaining, by the MC client, the indication information of the UE based on the third request message comprises:
obtaining, by the MC client, the indication information of the UE from the UE based on the third request message, wherein the indication information of the UE is generated by the UE or obtained by the UE from a network side.

26. A mission critical MC client, comprising an obtaining unit and a sending unit, wherein
the obtaining unit is configured to obtain indication information of user equipment UE currently used by a mission critical user, wherein the indication information of the UE comprises identification information of the UE, or identification information of the UE and a life cycle timer associated with the identification information; and
the sending unit is configured to send first information to a location management server LMS, so that the LMS establishes and saves, based on the first information, an association relationship between identity information of the mission critical user and the indication information of the UE currently used by the mission critical user, wherein the first information comprises the identity information of the mission critical user and the indication information of the UE currently used by the mission critical user.

27. The MC client according to claim 26, wherein the identification information of the UE comprises an international mobile subscriber identity IMSI of the UE, or a mobile station integrated services digital network number MSISDN of the UE, or an Internet Protocol IP address of the UE, or pseudo identification information of the UE.

28. The MC client according to claim 26 or 27, wherein the sending unit is specifically configured to:
send the first information to the LMS through an MC server.

29. The MC client according to any one of claims 26 to 28, wherein the obtaining unit is specifically configured to:
obtain the indication information of the UE from the UE currently used by the mission critical user, wherein the indication information of the UE is generated by the UE or obtained by the UE from a network side.

30. The MC client according to any one of claims 26 to 29, further comprising:
a receiving unit, configured to receive second information, wherein the second information comprises information indicating a result of establishing the association relationship.

31. A mission critical MC server, comprising a receiving unit and a sending unit, wherein
the receiving unit is configured to receive first information sent by an MC client, wherein the first information comprises identity information of a mission critical user and indication information of user equipment UE currently used by the mission critical user, and the indication information of the UE comprises identification information of the UE, or identification information of the UE and a life cycle timer associated with the identification information; and
the sending unit is configured to send the first information to a location management server LMS, so that the LMS establishes and saves, based on the first information, an association relationship between the identity information of the mission critical user and the indication information of the UE currently used by the mission critical user.

32. The MC server according to claim 31, wherein the MC server further comprises:
a check unit, configured to: before the sending unit sends the first information to the LMS, perform an authorization check on the mission critical user based on the identity information of the mission critical user; and
the sending unit is specifically configured to:
if the authorization check performed by the check unit on the mission critical user succeeds, send the first information to the LMS.

33. The MC server according to claim 31 or 32, wherein the receiving unit is further configured to:
after the sending unit sends the first information to the location management server LMS, receive second information sent by the LMS, wherein the second information comprises information indicating a result of establishing the association relationship; and
the sending unit is further configured to:
send the second information to the MC client.

34. The MC server according to claim 33, wherein the second information further comprises the association relationship; and
the MC server further comprises:
a saving unit, configured to save the association relationship after the receiving unit receives the second information sent by the LMS.

35. A location management server LMS, comprising a receiving unit, an establishment unit, and a saving unit, wherein
the receiving unit is configured to receive first information sent by a mission critical MC client, wherein the first information comprises identity information of a mission critical user and indication information of UE currently used by the mission critical user, and the indication information of the UE comprises identification information of the UE, or identification information of the UE and a life cycle timer associated with the identification information;
the establishment unit is configured to establish, based on the first information, an association relationship between the identity information of the mission critical user and the indication information of the UE currently used by the mission critical user; and
the saving unit is configured to save the association relationship.

36. The LMS according to claim 35, wherein the LMS further comprises:
a check unit, configured to: before the establishment unit establishes the association relationship between the identity information of the mission critical user and the indication information of the UE currently used by the mission critical user, perform a service authorization check on the mission critical user based on the identity information of the mission critical user; and
the establishment unit is specifically configured to:
if the service authorization check performed by the check unit on the mission critical user succeeds, establish the association relationship between the identity information of the mission critical user and the indication information of the UE currently used by the mission critical user.

37. The LMS according to claim 35 or 36, wherein the receiving unit is further configured to:
receive the first information sent by the MC client through an MC server.

38. The LMS according to claim 37, wherein the sending unit is further configured to:
send second information to the MC client, wherein the second information comprises information indicating a result of establishing the association relationship.

39. The LMS according to claim 35 or 36, wherein the sending unit is further configured to:
send second information to the MC server, wherein the second information comprises information indicating a result of establishing the association relationship.

40. The LMS according to claim 39, wherein if the association relationship is successfully established, the second information further comprises the association relationship.

41. A location management server LMS, comprising an obtaining unit, an establishment unit, and a saving unit, wherein
the obtaining unit is configured to obtain indication information of UE currently used by the mission critical user, wherein the indication information of the UE comprises identification information of the UE, or identification information of the UE and a life cycle timer associated with the identification information;
the establishment unit is configured to establish an association relationship between identity information of the mission critical user and the indication information of the UE currently used by the mission critical user; and
the saving unit is configured to save the association relationship.

42. The LMS according to claim 41, wherein the obtaining unit is specifically configured to:
send a first request message to a mission critical MC client, wherein the first request message carries the identity information of the mission critical user, and the first request message is used to request the indication information of the UE currently used by the mission critical user;
receive a first request response message sent by the MC client, wherein the first request response message carries the indication information of the UE currently used by the mission critical user; and
obtain, based on the first request response message, the indication information of the UE currently used by the mission critical user.

43. The LMS according to claim 41, wherein the obtaining unit is specifically configured to:
send a second request message to an MC server, wherein the second request message is used to request the indication information of the UE currently used by the mission critical user, and the second request message carries the identity information of the mission critical user;
receive a second request response message sent by the MC server, wherein the second request response message carries the indication information of the UE currently used by the mission critical user; and
obtain, based on the second request response message, the indication information of the UE currently used by the mission critical user.

44. The LMS according to claim 42, further comprising:
a sending unit, configured to: after the establishment unit establishes the association relationship between the identity information of the mission critical user and the indication information of the UE currently used by the mission critical user, send a notification message to an MC server, wherein the notification message carries the association relationship.

45. The LMS according to any one of claims 41 to 44, wherein the LMS further comprises:
a check unit, configured to: before the obtaining unit obtains the indication information of the UE currently used by the mission critical user, perform a service authorization check on the mission critical user based on the identity information of the mission critical user; and
the obtaining unit is specifically configured to:
if the service authorization check performed by the check unit on the mission critical user succeeds, obtain the indication information of the UE currently used by the mission critical user.

46. A mission critical MC server, comprising a receiving unit and a sending unit, wherein
the receiving unit is configured to receive a second request message sent by a location management server LMS, wherein the second request message is used to request indication information of user equipment UE currently used by the mission critical user, the indication information of the UE comprises identification information of the UE, or identification information of the UE and a life cycle timer associated with the identification information, and the second request message carries identity information of the mission critical user;
the sending unit is configured to send a third request message to an MC client, wherein the third request message is used to request the indication information of the user equipment UE currently used by the mission critical user, and the third request message carries the identity information of the mission critical user;
the receiving unit is further configured to receive a third request response message sent by the MC client, wherein the third request response message carries the indication information of the UE currently used by the mission critical user; and
the sending unit is further configured to send a second request response message to the LMS, so that the LMS establishes and saves, based on the second request response message, an association relationship between the identity information of the mission critical user and the indication information of the UE currently used by the mission critical user.

47. The MC server according to claim 46, wherein the MC server further comprises:
a check unit, configured to: before the sending unit sends the third request message to the MC client, perform an authorization check on the mission critical user based on the identity information of the mission critical user; and
the sending unit is specifically configured to:
if the authorization check performed by the check unit on the mission critical user succeeds, send the third request message to the MC client.

48. The MC server according to claim 46 or 47, wherein the MC server further comprises a saving unit;
the receiving unit is further configured to: after receiving the third request response message sent by the MC client, receive a notification message sent by the LMS, wherein the notification message carries the association relationship;
the obtaining unit is further configured to obtain the association relationship based on the notification message; and
the saving unit is configured to save the association relationship.

49. A mission critical MC client, comprising a receiving unit, an obtaining unit, and a sending unit, wherein
the receiving unit is configured to receive a first request message sent by a location management server LMS, wherein the first request message is used to request indication information of user equipment UE currently used by the mission critical user, the indication information of the UE comprises identification information of the UE, or identification information of the UE and a life cycle timer associated with the identification information, and the first request message carries identity information of the mission critical user;
the obtaining unit is configured to obtain the indication information of the UE based on the first request message; and
the sending unit is configured to send a first request response message to the LMS, so that the LMS establishes and saves an association relationship between the identity information of the mission critical user and the indication information of the UE based on the first request response message, wherein the first request response message carries the indication information of the UE; or
the receiving unit is configured to receive a third request message sent by an MC server, wherein the third request message is used to request indication information of UE currently used by the mission critical user;
the obtaining unit is configured to obtain the indication information of the UE based on the third request message; and
the sending unit is configured to send a third request response message to the MC server, so that the MC server sends a second request response message to the LMS, and the LMS establishes and saves an association relationship between identity information of the mission critical user and the indication information of the UE based on the second request response message, wherein the second request response message and the third request response message carry the indication information of the UE.

50. The MC client according to claim 49, wherein the obtaining unit is specifically configured to:
obtain the indication information of the UE from the UE based on the first request message, wherein the indication information of the UE is generated by the UE or obtained by the UE from a network side; or
obtain the indication information of the UE from the UE based on the third request message, wherein the indication information of the UE is generated by the UE or obtained by the UE from a network side.

51. A mission critical service communications system, comprising a mission critical MC client and a location management server LMS, wherein
the MC client obtains indication information of user equipment UE currently used by a mission critical user, and sends first information to the LMS, wherein the first information comprises identity information of the mission critical user and the indication information of the UE currently used by the mission critical user, and the indication information of the UE comprises identification information of the UE, or identification information of the UE and a life cycle timer associated with the identification information; and
the LMS receives the first information sent by the MC client, and establishes and saves, based on the first information, an association relationship between the identity information of the mission critical user and the indication information of the UE currently used by the mission critical user.

52. The system according to claim 51, wherein the system further comprises an MC server;
that the MC client sends a first message to the LMS comprises:
the MC client sends the first information to the LMS through the MC server; and
that the LMS receives the first information sent by the MC client comprises:
the LMS receives the first information sent by the MC client through the MC server.

53. A mission critical service communications system, comprising a mission critical MC client and a location management server LMS, wherein
the LMS sends a first request message to the MC client, wherein the first request message carries identity information of the mission critical user, the first request message is used to request indication information of user equipment UE currently used by the mission critical user, and the indication information of the UE comprises identification information of the UE, or identification information of the UE and a life cycle timer associated with the identification information;
the MC client receives the first request message sent by the LMS, and obtains the indication information of the UE based on the first request message;
the MC client sends a first request response message to the LMS, wherein the first request response message carries the indication information of the UE currently used by the mission critical user;
the LMS receives the first request response message sent by the MC client, and obtains, based on the first request response message, the indication information of the UE currently used by the mission critical user; and
the LMS establishes and saves an association relationship between the identity information of the mission critical user and the indication information of the UE.

54. A mission critical service communications system, comprising a mission critical MC client, an MC server, and a location management server LMS, wherein
the LMS sends a second request message to the MC server, wherein the second request message is used to request indication information of user equipment UE currently used by the mission critical user, the second request message carries identity information of the mission critical user, and the indication information of the UE comprises identification information of the UE, or identification information of the UE and a life cycle timer associated with the identification information;
the MC server receives the second request message sent by the LMS, and sends a third request message to the MC client, wherein the third request message is used to request the indication information of the UE currently used by the mission critical user, and the third request message carries the identity information of the mission critical user;
the MC client receives the third request message sent by the MC server, and obtains the indication information of the UE based on the third request message;
the MC client sends a third request response message to the MC server, wherein the third request response message carries the indication information of the UE currently used by the mission critical user;
the MC server receives the third request response message sent by the MC client, and sends a second request response message to the LMS, wherein the second request response message carries the indication information of the UE currently used by the mission critical user; and
the LMS receives the second request response message sent by the MC server, obtains, based on the second request response message, the indication information of the UE currently used by the mission critical user, and establishes and saves an association relationship between the identity information of the mission critical user and the indication information of the UE.
